# EUROPEAN PATENT APPLICATION

(11) **EP 2 667 285 A2**
(43) Date of publication of application: **27.11.2013**
(21) Application number: 13168747.7
(22) Date of filing: 22.05.2013
(51) Int. Cl.: G06F 3/01, G06F 3/0485, G06F 3/0488

(54) **Method for providing ui and portable apparatus applying the same**

(30) Priority: 22.05.2012 KR 20120054217; 23.11.2012 KR 20120133931; 02.01.2013 KR 20130000346; 16.05.2013 KR 20130055689
(71) Applicant: Samsung Electronics Co., Ltd, Gyeonggi-do 443-742 (KR)
(72) Inventor: Jung, Ji-su, Chungcheongbuk-do (KR); Kang, Tae-young, Seoul (KR); Park, Hyo-ri, Seoul (KR); Jung, Jong-woo, Seoul (KR); Moon, Min-jeong, Seoul (KR); Park, Se-jun, Seoul (KR); Chang, Woo-yong, Gyeonggi-do (KR); Han, Chul-ho, Seoul (KR); Myung, In-Sik, Incheon (KR); Cho, Dong-bin, Gyeonggi-do (KR)
(74) Representative: Birchenough, Lewis

(57) **Abstract**

A method for providing a UI and a portable apparatus applying the same are provided. The method for providing the UI of the portable apparatus includes determining whether motion of shaking the portable apparatus a predetermined number of times is input or not using a sensor included in the portable apparatus, and, if the motion of shaking the portable apparatus the predetermined number of times is input, providing haptic feedback according to a number of pieces of information displayed on a notice window of the portable apparatus. Accordingly, if a predetermined event occurs, haptic feedback corresponding to the predetermined event is provided, so that the user can identify the event without seeing a display.

## Description

### BACKGROUND

### 1. Field

The present invention relates generally to a method for providing a user interface (UI) and a portable apparatus applying the same. More particularly, although not exclusively, the present invention relates to a method for providing a UI, which provides haptic feedback to a user according to a predetermined event, and a portable apparatus applying the same.

### 2. Description of the Related Art

With the development of technologies, portable apparatuses, for example mobile phones, tablet personal computers (PCs), notebook PCs, and portable multimedia players (PMPs), show improved performance, while they have been made smaller in size and lighter. However, there is a problem that a display of the portable apparatus is small due to the miniaturization and light weight of the portable apparatus.

Therefore, since portable apparatuses have been made smaller and lighter in recent years, portable apparatuses are being widely used that do not have a key pad equipped with a plurality of buttons, but instead use a touch screen to allow a user to input a user command by touching a display, in order to provide a big size display. Also, a touch screen may allow more diverse input than a limited number of physical buttons.

Such a touch screen typically includes a screen which is implemented, for example, by using a liquid crystal display (LCD), and a touch panel which is disposed on the screen. Accordingly, a user may, for example, execute an application by touching an icon displayed on the touch screen with his/her finger or using a pointer device, or may input characters by touching a touch key board displayed on a certain region. Also, the user may identify an event occurring in the portable apparatus by viewing information displayed on the touch screen.

However, the user must be able to see the touch screen to identify the event occurring in the portable apparatus. That is, there is no way for the user to identify that the event is occurring in the portable apparatus unless the user sees the touch screen.

Also, if feedback is not provided to the user when the event occurs, it may be difficult for the user to identify whether the event occurs or not, even if the user sees the touch screen.

Therefore, there is a demand for a method for allowing a user to identify that an event is occurring, or has occurred, in a portable apparatus more easily and intuitively.

### SUMMARY

It is an aim of certain embodiments of the present invention to address, solve, mitigate or obviate, at least partly, at least one of the problems and/or disadvantages associated with the related art, for example one or more of the problems and/or disadvantages described above. Certain embodiments of the present invention aim to provide at least one advantage over the related art, for example one or more of the advantages described below. However, it is understood that one or more exemplary embodiment may not overcome the problems and/or disadvantages described above, and may not provide any of the advantages described below.

One or more exemplary embodiments provide a method for providing a UI, which provides haptic feedback according to a predetermined event in order for a user to identify an event occurring in a portable apparatus more easily and intuitively, and a portable apparatus applying the same.

One or more exemplary embodiments provide a method for providing a UI, which adjusts a scroll speed if a certain item (e.g. a meaningful item) is displayed, while scrolling a portable apparatus, and a portable apparatus applying the same.

According to an aspect of the present invention, there is provided a method for providing a user interface (UI), the method including: displaying a screen which includes at least one movable object; moving at least one displayed object according to user manipulation; determining whether the object which is being moved is located within a certain region (e.g. a region in which the object is allowed to be located); and providing haptic feedback according to a result of the determination.

The determining may include: if the object is moved, examining coordinates of a location of the moved object; and determining whether the coordinates of the location of the moved object are coordinates located within the region in which the object is allowed to be located.

The providing the haptic feedback may include, if the coordinates of the location of the moved object are coordinates located within the region in which the object is allowed to be located, providing the haptic feedback.

If the object is not allowed to move to a region in which another object is located, the providing the haptic feedback may include, if coordinates of a region of the moved object are coordinates located within the region in which the other object is located, refraining from providing the haptic feedback, and, if the coordinates of the region of the moved object are coordinates located within a region in which the other object is not located, providing the haptic feedback.

If the object is allowed to move in a region in which another object is located, the providing the haptic feedback may include: if coordinates of a region of the moved object are coordinates located within the region in which the other object is located, providing the haptic feedback; exchanging locations of the object and the other object; and displaying the object and the other object.

According to another aspect of the present invention, there is provided a portable apparatus including: a display for displaying a screen including at least one movable object; a haptic feedback provider for providing haptic feedback; and a controller for, if the object is moved according to user manipulation, determining whether region information on a location of the moved object is information on a region on which the object is allowed to be located (e.g. determining whether the object which is being moved is located within a region in which the object is allowed to be located), and for controlling the haptic feedback provider to provide haptic feedback according to a result of the determination.

According to another aspect of the present invention, there is provided a method for providing a user interface (UI), the method including: displaying a list including a plurality of items on a screen; moving the plurality of items displayed on the screen in a first (e.g. predetermined) direction according to a scroll command (e.g. on the list); displaying the plurality of items; and, if a predetermined item is displayed on the screen, providing haptic feedback.

The predetermined item may be a first item or a final item from among the items included in the list.

If the scroll command is input by touching the display screen with an object (e.g. a user's hand or finger) and moving the object in a second (e.g. predetermined) direction while still touching the display screen, the providing the haptic feedback may include, if the first item or the final item is displayed, providing different haptic feedback according to a touch movement speed of the object.

The list may be a phone number list, and the predetermined item may be one of an item corresponding to a phone number which is marked as favorites, an item corresponding to a phone number to which a shortcut button is assigned, and an item corresponding to a most recently dialed phone number.

According to another aspect of the present invention, there is provided a portable apparatus including: a display for displaying a list including a plurality of items; a haptic feedback provider for providing haptic feedback; and a controller for controlling the display to move the plurality of items in a first (e.g. predetermined) direction according to a scroll command (e.g. on the list) and display the plurality of items, and, if a predetermined item is displayed on the display, for controlling the haptic feedback provider to provide haptic feedback.

According to another aspect of the present invention, there is provided a method for providing a UI, the method including: displaying e-book content; determining whether a page that is displayed on a screen according to a page changing command (e.g. on the e-book content) is a predetermined page or not; and, if the page displayed on the screen is the predetermined page, providing haptic feedback.

The predetermined page may be one of a start page and a final page of the e-book content.

If the page changing command is input by touching a display screen with an object (e.g. a user's hand or finger) and moving the object in a specific (e.g. first) direction while still touching the display screen, the providing the haptic feedback may include providing different haptic feedback according to a touch movement speed of the object.

The predetermined page may be a page which is marked with a bookmark.

According to another aspect of the present invention, there is provided a portable apparatus including: a display for displaying e-book content; a haptic feedback provider for providing haptic feedback; and a controller for determining whether a page that is displayed on the display according to a page changing command (e.g. on the e-book content) is a predetermined page or not, and, if the page displayed on the display is the predetermined page, for controlling the haptic feedback provider to provide haptic feedback.

According to another aspect of the present invention, there is provided a method for providing a UI, the method including: displaying a list including a plurality of items on a screen; moving the plurality of items displayed on the screen in a first (e.g. predetermined) direction according to a scroll command (e.g. on the list); displaying the plurality of items; and, if an item that satisfies a first (e.g. predetermined) condition is displayed on the screen, changing a scroll speed.

The changing the scroll speed may include, if the item that satisfies the predetermined condition is displayed on the screen, reducing the scroll speed.

The method may further include, if the item that satisfies the predetermined condition is displayed on the screen, displaying details of the predetermined condition on the display screen.

The details of the predetermined condition may be displayed in a pop-up window form.

The changing the scroll speed may include, if the item that satisfies the predetermined condition is displayed on the screen, continuing displaying the item that satisfies the predetermined condition on the list and moving the other items displayed on the screen in the predetermined direction and displaying the other items.

The list may comprise a phone number list and the item that satisfies the predetermined condition may comprise at least one of: an item corresponding to a phone number which is marked as a favorite, an item corresponding to a phone number to which a shortcut button is assigned, an item corresponding to a most recently dialed phone number, an item corresponding to a phone number of a missed call, and an item corresponding to a phone number of a user who has more than a predetermined number of schedules.

The list may comprise a list of received messages and the item that satisfies the predetermined condition may comprise at least one of: an item corresponding to a message including photo data, an item corresponding to a message including moving image data, an item corresponding to a message including phone number information, and an item corresponding to a message including address information.

The list may comprise a list of contents and the item that satisfies the predetermined condition may comprise at least one of an item corresponding to content that has more than a predetermined number of recommendations, an item corresponding to a latest content, an item corresponding to content of a predetermined genre, and an item corresponding to content that is paused.

The list may comprise a list of products of internet shopping, and the item that satisfies the predetermined condition may comprise at least one of: an item corresponding to a product that has more than a predetermined number of recommendations, an item corresponding to a product that has the highest number of sales, an item corresponding to a product that has a price within a predetermined range, and an item corresponding to a product that has more than a predetermined number of product reviews.

According to another aspect of the present invention, there is provided a portable apparatus including: a display for displaying a list including a plurality of items; a user input unit for receiving user manipulation; and a controller for, if scroll manipulation (e.g. on the list) is input through the user input unit, controlling the display to move the plurality of items in a first (e.g. predetermined) direction according to the scroll manipulation and display the plurality of item, and, if an item that satisfies a first (e.g. predetermined) condition is displayed on the display, for changing a scroll speed of the item.

According to another aspect of the present invention, there is provided a method for providing a user interface (UI), the method including: displaying a plurality of contents; distinguishing at least one content that corresponds to a scroll speed from a plurality of contents as searched in response to a scroll input; and displaying the result, in response to an input of the scroll input to search the plurality of contents.

The at least one content may be included in a group that corresponds to the scroll speed, among a plurality of groups classified according to a preset classification criterion.

The plurality of groups may include a first group, a second group, and a third group, and displaying the result may include, when the scroll speed is in a first speed range, displaying at least one content that belongs to the first group, or when the scroll speed is in a second speed range, displaying at least one content that belongs to the first and second groups, respectively, or when the scroll speed is in a third speed range, displaying at least one content that belongs to the first to third groups, respectively.

The preset classification criterion may include a frequency of playing the plurality of contents, and the first to third groups may include the contents that are classified in order of frequency of playing (e.g. in order of highest to lowest).

The preset classification criterion may include a popularity of the plurality of contents, and the first to third groups may include the contents that are classified in order of popularity of the contents (e.g. in order of highest to lowest).

The preset classification criterion may include a user preference to the plurality of contents, and the first to third groups may include the contents that are classified in the order of higher user preference to the plurality of contents.

The displaying the result may include displaying at least one content that corresponds to the scroll speed one by one, by overlapping the plurality of contents as searched in response to the scroll input.

The displaying the result may include displaying at least one content that corresponds to the scroll speed so that the at least one content pops up, by overlapping the plurality of contents as searched in response to the scroll input.

The displaying the result may include displaying at least one content that corresponds to the scroll speed among a plurality of contents as searched in response to the scroll input.

The displaying the result may include displaying at least one content that corresponds to the scroll speed in a state that the scroll input is maintained.

According to an aspect of one or more embodiments, there is provided at least one computer readable medium storing computer readable instructions to implement methods of embodiments.

Another aspect of the present invention provides a computer program comprising instructions arranged, when executed, to implement a method, system and/or apparatus in accordance with any one of the aspects and/or claims disclosed herein. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and/or other aspects, and features and advantages of certain exemplary embodiments and aspects of the present invention will be more apparent from the following detailed description of exemplary embodiments, with reference to the accompanying drawings, in which:
FIG. 1 is a block diagram illustrating a portable apparatus according to an exemplary embodiment;
FIGS. 2 to 52 are flowcharts and views to explain a method for providing haptic feedback corresponding to a predetermined event if the predetermined event occurs according to an exemplary embodiment;
FIG. 53 is a block diagram illustrating a hardware configuration and a software configuration of a portable apparatus according to an exemplary embodiment; FIGS. 54 to 58 are flowcharts and views to explain a method for providing a UI, which adjusts a scroll speed if an important item is displayed while scrolling according to an exemplary embodiment;
FIG. 59 is a block diagram provided to explain a configuration of a display apparatus according to an exemplary embodiment;
FIG. 60 is provided to explain content which is displayed in accordance with scroll speed, according to an exemplary embodiment;
FIGS. 61 to 67 are views provided to explain a method for displaying content according to scroll speed, according to an exemplary embodiment;
FIG. 68 is a flowchart provided to explain a method for displaying content according to scroll speed, according to an exemplary embodiment; and
FIG. 69 is a flowchart provided to explain a content display method according to an exemplary embodiment.

### DETAILED DESCRIPTION

Hereinafter, exemplary embodiments of the present invention will be described in greater detail with reference to the accompanying drawings. The following description is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention. For example, in certain embodiments, one or more components may be omitted, one or more components may be added, and/or one or more components may be replaced with functionally equivalent components.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

The same or similar reference numerals may be used to denote or refer to the same or similar elements, even though they may be depicted in different drawings. Detailed descriptions of structures, constructions, functions or processes known in the art may be omitted for clarity and conciseness, and to avoid obscuring the subject matter of the present invention.

Throughout the description and claims of this specification, the words "include", "comprise" and "contain" and variations of the words, for example "including", "comprising" and "containing", means "including but not limited to", and is not intended to (and does not) exclude other moieties, additives, components, integers or steps.

Throughout the description and claims of this specification, the singular (for example "a," "an," and "the") encompasses the plural, unless the context otherwise requires. Thus, for example, reference to "an object" includes reference to one or more of such objects.

Features, components, integers, element, steps, processes, characteristics, compounds, chemical moieties or groups etc. described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted, configured or arranged specifically, but not exclusively, to do Y.

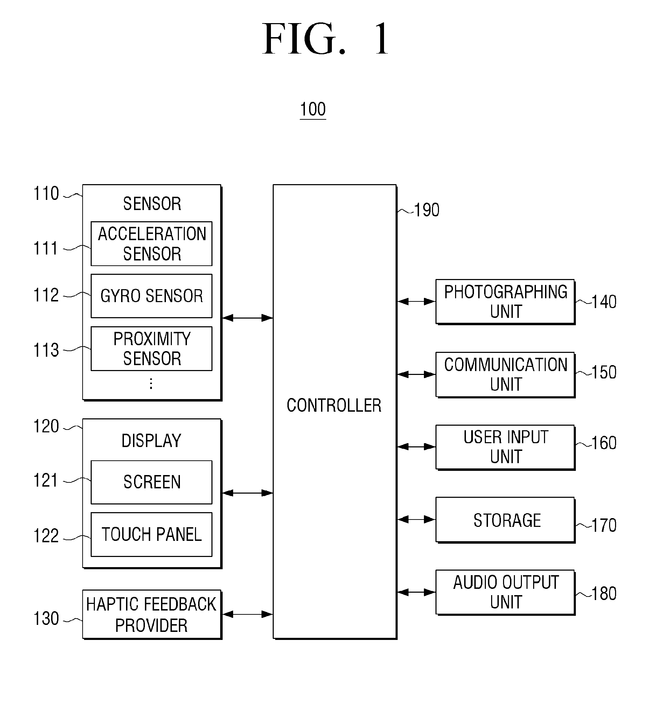

FIG. 1 is a block diagram illustrating a portable apparatus 100 according to an exemplary embodiment. As shown in FIG. 1, the portable apparatus 100 includes a sensor 110, a display 120, a haptic feedback provider 130, a photographing unit 140, a communication unit 150, a user input unit 160, a storage 170, an audio output unit 180, and a controller 190. The portable apparatus 100 according to an exemplary embodiment may be a smartphone. However, this is merely an example and the portable apparatus 100 may be a tablet personal computer (PC), a personal digital assistant (PDA), a personal media player (PMP), a notebook computer, or a PC.

The sensor 110 senses user's motion on the portable apparatus 100. Specifically, the sensor 110 senses user's specific motion on the portable apparatus 100 (for example, motion of shaking the portable apparatus 100 or motion of tilting the portable apparatus 100).

As shown in FIG. 1, the sensor 110 may include an acceleration sensor 111, a gyro sensor 112, and a proximity sensor 113. In particular, the sensor 110 measures a moving direction and acceleration of the portable apparatus 100 using one of the acceleration sensor 111 and the gyro sensor 112. Also, the sensor 110 senses motion of an object (for example, user's hand or a digital pen) using the proximity sensor 113.

The display 120 includes a touch screen and accordingly includes a screen 121 and a touch panel 122 which constitute the touch screen. The display 120 displays a variety of image information, and data and images that are received from a base station or stored in the storage 170 on the screen 121 under the control of the controller 190. The screen 121 may be implemented by using a liquid crystal display (LCD) and may include an LCD controller, a memory which stores display data, and an LCD display element.

The touch panel 122 overlaps with the LCD of the screen 121, and thus the user can input touch while checking data displayed on the screen 121. The touch panel 122 includes a touch sensor and a signal converter. The touch sensor senses a control command of touch such as touch, drag, and drop based on a change in a physical quantity, for example, a resistance and capacitance. Also, the signal converter converts the change in the physical quantity into a touch signal and outputs the touch signal to the controller 190.

If a predetermined event occurs, the haptic feedback provider (haptic feedback unit) 130 provides haptic feedback corresponding to the predetermined event. The haptic feedback refers to technology that generates vibration, force or shock in the portable apparatus 100 and gives a user a tangible sense of touch, and may be called computer haptic technology.

The haptic feedback provider 130 may provide a variety of feedback by applying a different vibration condition (for example, a different vibration frequency, a different vibration length, a different vibration intensity, a different vibration waveform, and a different vibration location) according to a predetermined event under the control of the controller 190. The method for generating a variety of haptic feedback by applying a different vibration method is disclosed in the prior art and thus a detailed description thereof is omitted.

The haptic feedback provider 130 may provide haptic feedback to a rear surface of the portable apparatus 100 as well as a front surface (on which the display 120 is disposed). Also, the haptic feedback provider 130 may provide haptic feedback to the entire portable apparatus 100. However, this is merely an example and the haptic feedback provider 130 may provide haptic feedback to only a certain region of the portable apparatus 100 (for example, a touch point or an edge portion).

In the above exemplary embodiment, the haptic feedback provider 130 provides haptic feedback using a vibration sensor. However, this is merely an example and the haptic feedback provider 130 may provide haptic feedback using a piezo sensor.

The photographing unit 140 photographs a surrounding image including a specific object. Specifically, the photographing unit 140 focuses an image onto an image sensing area using a camera included in the photographing unit 140, and an image sensor converts light entering through a lens into an electric signal. An image processor (not shown) included in the photographing unit 140 obtains image data by performing signal processing with respect to an image which is input from the image sensor. The image data may be displayed on the display 120 or stored in the storage 170.

The communication unit 150 may communicate with an external apparatus. The communication unit 150 may include at least one of a Wi-Fi network, a Zigbee network, a near field communication (NFC) network, and a Bluetooth network.

The user input unit 160 is a button that is provided on an outside of the portable apparatus and receives a user command.

The storage 170 stores various data and programs for controlling the portable apparatus. In particular, the storage 170 may match a predetermined event with haptic feedback information and may store them. Accordingly, if a predetermined event occurs, the controller 190 may retrieve the predetermined event stored in the storage 170 and may drive the haptic feedback provider 130 using haptic feedback information corresponding to the predetermined event.

The audio output unit 180 outputs audio data under the control of the controller 190. The audio output unit 180 may be implemented by using a speaker which directly outputs a sound. However, this is merely an example and the audio output unit 180 may be implemented by using a terminal which transmits an audio signal to an external apparatus.

The controller 190 controls an overall operation of the portable apparatus according to a user command which is input to the sensor 110, the display 120, and the user input unit 160. In particular, if a predetermined even t occurs, the controller 190 may provide haptic feedback corresponding to the predetermined event.

According to an exemplary embodiment, if a screen including at least one movable object is displayed on the display 120, and, if the object is moved according to user manipulation to move the object, the controller 190 may determine whether region information on a location to which the object is moved is information on a region where the object is allowed to be located, and may control the haptic feedback provider 130 to provide haptic feedback according to a result of the determining.

Specifically, if the object is moved, the controller 190 may examine coordinates of a location of the moved object, and may determine whether the coordinates of the location of the moved object are included in coordinates of a region where the object is allowed to be located. If the coordinates of the location of the moved object are included in the coordinates of the region where the object is allowed to be located, the controller 190 may control the haptic feedback provider 130 to provide haptic feedback.

For example, if the object is not allowed to move to a region on which another object is located, and, if the coordinates of the location of the moved object are included in coordinates of the region on which the another object is located, the controller 190 may control the haptic feedback provider 190 not to provide haptic feedback. On the other hand, if the coordinates of the location of the moved object are included in coordinates of a region which the another object is not located, the controller 190 may control the haptic feedback provider 190 to provide haptic feedback. For another example, if the object is allowed to move to a region on which another object is located, and, if the coordinates of the location of the moved object are included in coordinates of the region on which the another object is located, the controller 190 may control the haptic feedback provider 130 to provide haptic feedback. At this time, the controller 190 may control the display 120 to exchange the location of the object and the location of the another object and display the objects.

According to another exemplary embodiment, the controller 190 may control the display 120 to display a list including a plurality of items on the screen and move the plurality of items displayed on the screen in a predetermined direction according to scroll manipulation on the list. For example, the list according to an exemplary embodiment may be a list of phone numbers and the plurality of items may be items corresponding to phone numbers.

If a predetermined item is displayed on the screen according to an item movement condition, the controller 190 may control the haptic feedback provider 130 to provide haptic feedback. For example, if a list of phone numbers is generated, the predetermined item may be one of an item corresponding to a phone number which is marked as favorites, an item corresponding to a phone number to which a shortcut button is assigned, and an item corresponding to a most recently dialed number. For another example, the predetermined item may be a first item or a final item from among the items of the list. If the scroll command is a command to touch the display 120 with user's hand and move the user's hand in a specific direction while still touching, and, if the first or final item is displayed, the controller 190 may control the haptic feedback provider 130 to provide different haptic feedback according to a touch movement speed of the user's hand. For example, as the touch movement speed of the user's hand increases, the controller 190 may control the haptic feedback provider 130 to provide haptic feedback of a high intensity of vibration.

According to another exemplary embodiment, if a user command to execute an e-book content is input, the controller 190 controls the display 120 to display an e-book content. Also, the controller 190 determines whether a page that is displayed on the screen according to a page changing command on the e-book content is a predetermined page or not. If the page displayed on the screen is the predetermined page, the controller 190 may control the haptic feedback provider 130 to provide haptic feedback.

The predetermined page may be one of a first page and a final page of the e-book content. If the page changing command is a command to touch the display screen with user's hand and move the user's hand in a specific direction while still touching, the controller 190 may control the haptic feedback provider 130 to provide different haptic feedback according to a touch movement speed of the user's hand. For example, as the touch movement speed of the user's hand increases, the controller 190 may provide haptic feedback of a high intensity of vibration. For another example, the predetermined page may be a page which is marked with a bookmark. That is, if the page marked with the bookmark is displayed, the controller 190 may control the haptic feedback provider 130 to provide haptic feedback.

The controller 190 according to an exemplary embodiment may provide haptic feedback if an event other than the above-described event occurs.

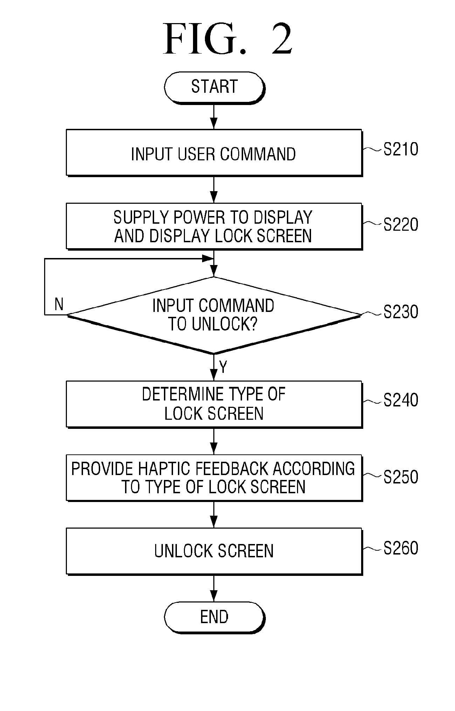

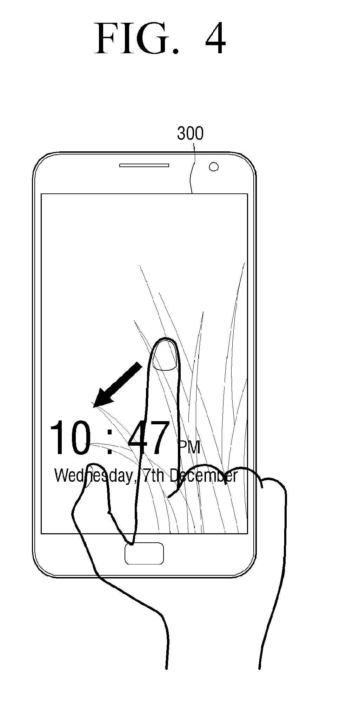

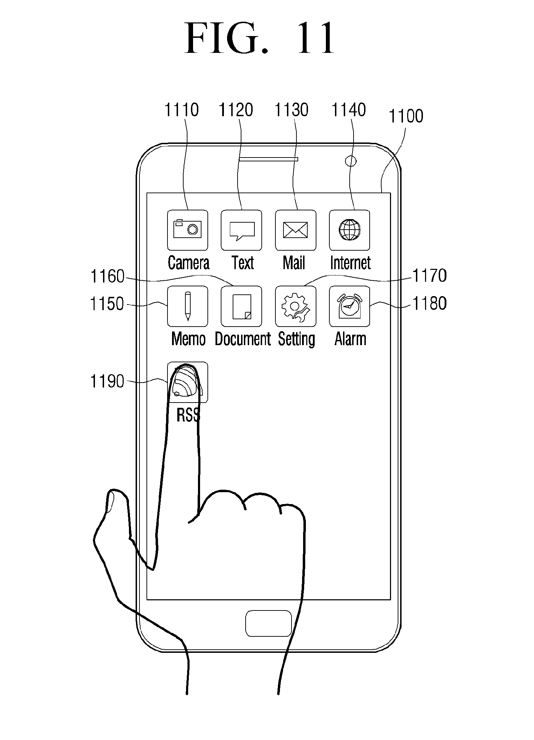

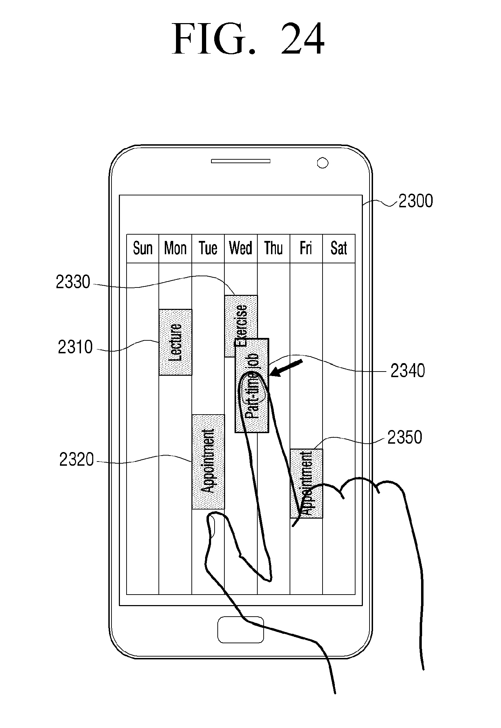

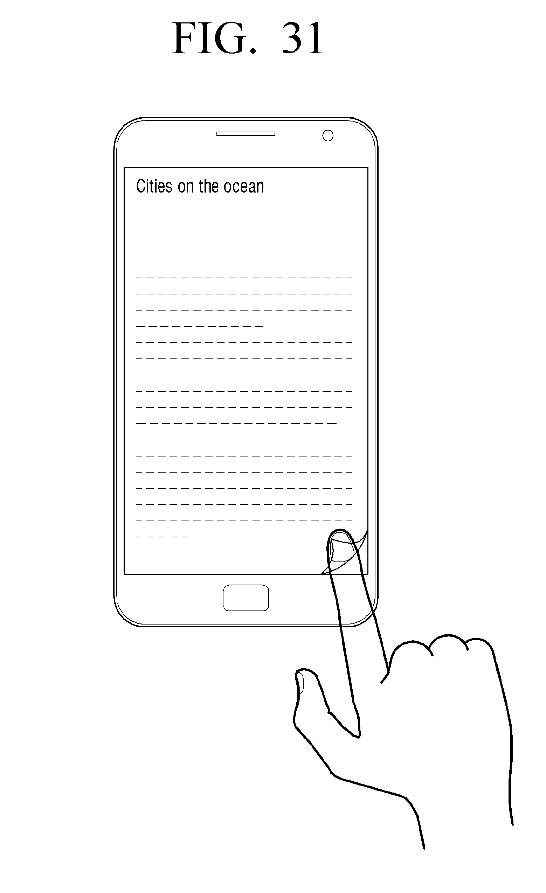

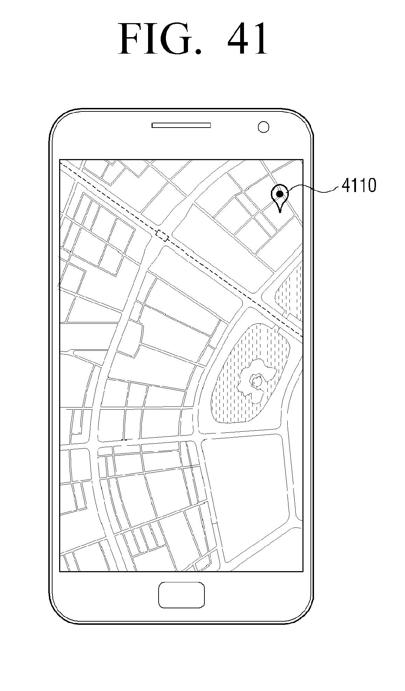

Hereinafter, an exemplary embodiment in which the controller 190 provides haptic feedback if various events occur will be explained in detail with reference to FIGS. 2 to 51.

Referring to FIGS. 2 to 4, a method for providing haptic feedback if a lock screen is unlocked will be explained. FIG. 2 is a flowchart illustrating a method for providing haptic feedback if a lock screen (300) is unlocked according to an exemplary embodiment.

First, a user command to turn on the display 120 is input through the user input unit 150 (S210).

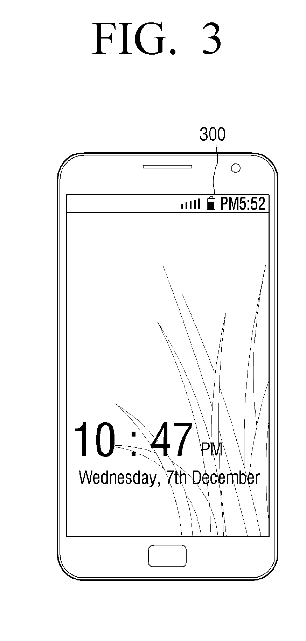

At this time, if the user command to turn on the display 120 is input, the controller 190 supplies power to the display 120 and a lock screen is displayed as shown in FIG. 3 (S220).

The controller 190 determines whether an unlocking command is input or not (S230). At this time, the unlocking command may be touch input that is input through the touch panel of the display 120. For example, the unlocking command may be a flick operation that touches the lock screen and moves the lock screen with higher than specific acceleration, while still touching. However, this is merely an example and an unlocking command of a different method (for example, an operation of touching a specific icon and moving it while still touching) may be included in the technical idea of the present disclosure.

If the unlocking command is input (S230-Y), the controller 190 determines a type of the currently set lock screen (S240).

The controller 190 provides haptic feedback according to the determined type of the lock screen (S250). That is, the controller 190 may provide haptic feedback by applying a different vibration condition according to the type of the lock screen.

Also, the controller 190 may provide haptic feedback adaptively according to the type of the lock screen. For example, if the lock screen is a curtain image, the controller 190 may provide haptic feedback giving a sense of feeling_that real curtains are drawn back. If the lock screen is a marble image, the controller 190 may provide haptic feedback giving a sense of feeling that real marbles are moved in a box.

The controller 190 unlocks the lock screen (S260). After that, the controller 190 may display a home screen on which an icon controllable by the user is displayed.

As described above, the controller 190 provides haptic feedback according to the type of the unlock screen, so that the user can know that the lock screen is unlocked without seeing the display 120, and interesting factors also increase.

According to another exemplary embodiment, if the lock screen is unlocked and a specific event or a specific application is directly executed, the controller 190 may provide predetermined haptic feedback according to the executed application. For example, if the lock screen is unlocked and an application 'a' is directly executed, the controller 190 may provide predetermined first haptic feedback according to the application 'a', and, if the lock screen is unlocked and an application 'b' is directly executed, the controller 190 may provide predetermined second haptic feedback corresponding to the application 'b'.

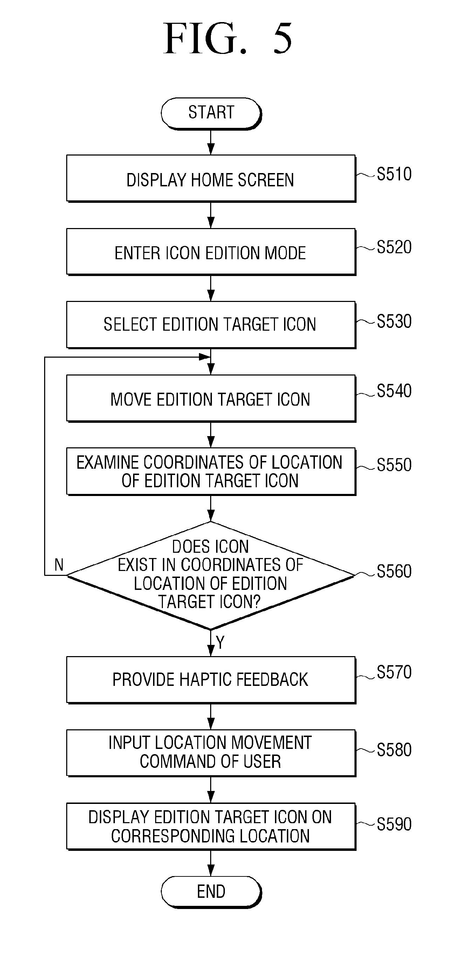

Hereinafter, a method for providing a UI according to icon movement will be explained with reference to FIGS. 5 to 9. Specifically, a method for providing haptic feedback according to icon movement if an icon is not allowed to move to a location on which another icon is displayed will be explained. FIG. 5 is a flowchart to explain a method for providing a UI according to icon movement according to an exemplary embodiment.

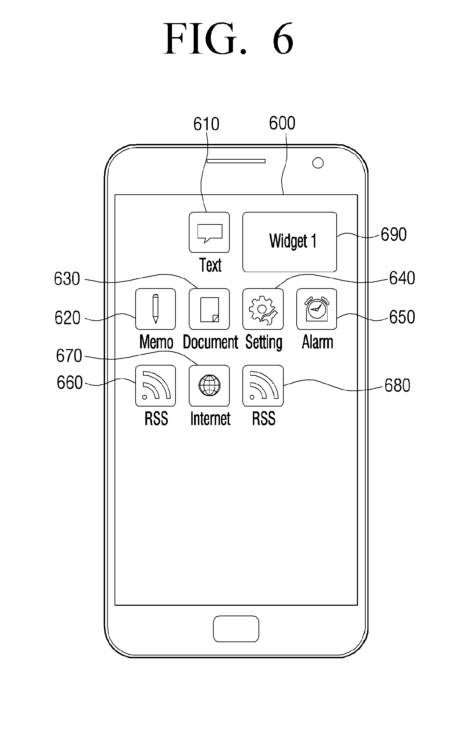

First, the controller 190 displays a home screen 600 on the display 120 (S510). At this time, the home screen is a screen that is displayed when the lock screen is unlocked, and displays a plurality of icons 610 to 690 corresponding to a plurality of applications and a widget 690 providing time information as shown in FIG. 6.

The controller 190 enters an icon edition mode based on a user command (S520). At this time, the user command to enter the icon edition mode may be input by touching one of the plurality of icons 610 to 680 for a predetermined time (for example, 2 seconds).

If the controller 190 enters the icon edition mode, the controller 190 selects an edition target icon according to a user command (S530). At this time, the user command to select the edition target icon may be input by touching an icon that the user wants to edit.

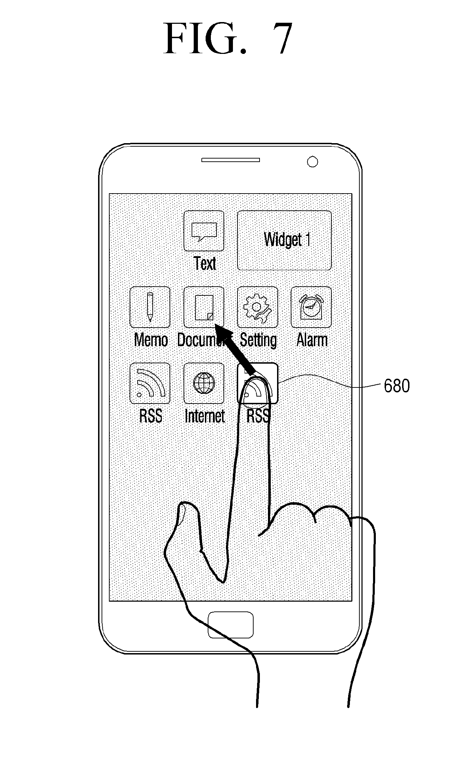

The controller 190 moves the edition target icon according to a user command (S540). The user command to move the edition target icon may be input by dragging the selected edition target icon 680 while still touching as shown in FIG.7

The controller 190 examines coordinates of a location of the edition target icon while the edition target icon is being moved (S550). The controller 190 determines whether an icon exists in the coordinates of the location of the edition target icon (S560).

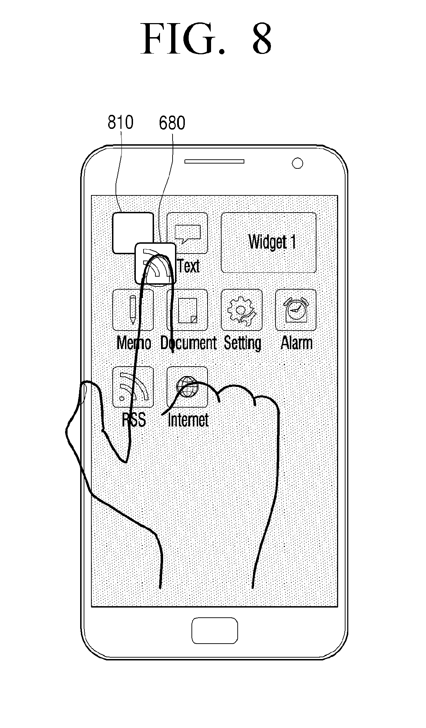

If an icon does not exist in the coordinates of the location of the edition target icon (S560-N), the controller 190 provides haptic feedback (S570). For example, if the coordinates of the location of the edition target icon are located on a first movable region 810 in which an icon does not exist as shown in FIG. 8, the controller 190 may provide haptic feedback.

The controller 190 receives a location movement command of the user (S580). The location movement command of the user may be input by raising the user's hand from the edition target icon.

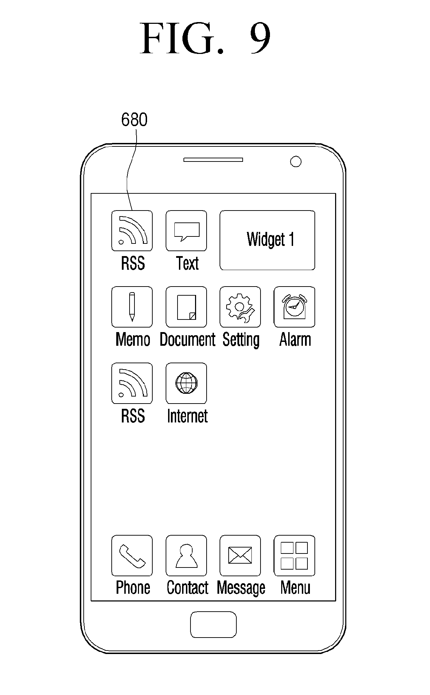

The controller 190 displays the edition target icon on the corresponding location (S590). That is, as shown in FIG. 9, the controller 190 may display the edition target icon 680 on the first movable region 810.

However, if an icon exists in the coordinates of the location of the edition target icon (S560-Y) as shown in FIG. 8, the controller 190 does not provide haptic feedback and moves the edition target icon according to a user command (S540).

As described above, if the edition target icon is not allowed to move a region on which another icon is located, haptic feedback is provided according to whether another icon is located on the coordinates of the location of the edition target icon, so that the user can identify a space where the edition target icon can be located without seeing the display screen.

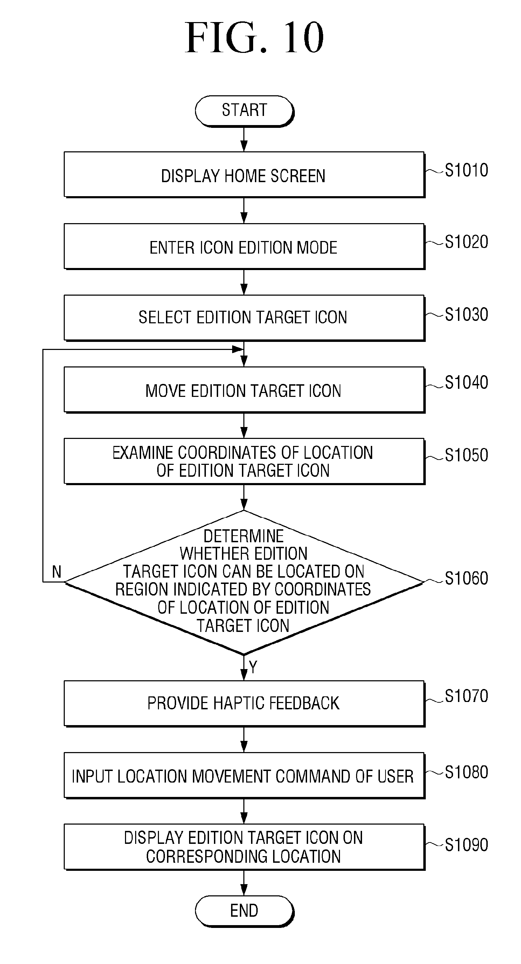

Hereinafter, a method for providing a UI according to icon movement according to another exemplary embodiment will be explained with reference to FIGS. 10 to 13. Specifically, a method for providing haptic feedback according to icon movement if an icon on a display screen is allowed to move to a location on which another icon is located will be explained. FIG. 10 is a flowchart to explain a method for providing a UI according to icon movement according to an exemplary embodiment.

First, the controller 190 displays a home screen on the display 120 (S1010). The home screen is a screen that is displayed when the lock screen is unlocked, and may display a plurality of icons 1110 to 1190 corresponding to a plurality of applications.

The controller 190 enters an icon edition mode according to a user command (S1020). At this time, the user command to enter the icon edition mode may be input by touching one of the plurality of icons 1110 to 1190 for a predetermined time (for example, 2 seconds).

If the controller 190 enters the icon edition mode, the controller 190 selects an edition target icon according to a user command (S1030). The user command to select the edition target icon may be input by touching an icon that the user wants to edit.

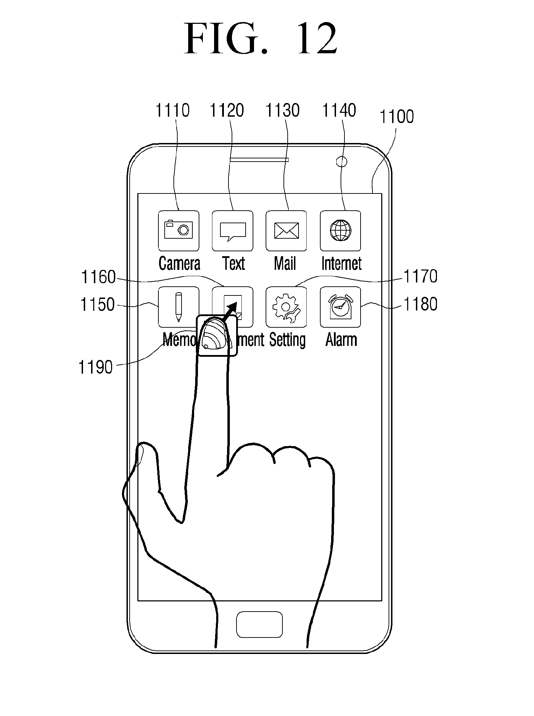

The controller 190 moves the edition target icon according to a user command (S1040). At this time, the user command to move the edition target icon may be input by dragging the selected edition target icon 1190 while still touching as shown in FIG. 12.

The controller 190 examines coordinates of a location of the edition target icon while the edition target icon is being moved (S1050). The controller 190 determines whether the coordinates of the location of the edition target icon indicate a region where the edition target icon is allowed to be located (S1060). At this time, another icon may be located on the region where the edition target icon is allowed to be located. Specifically, if the edition target icon occupies a location of one icon by more than a predetermined ratio (for example, 50%) even if the edition target icon is located over a plurality of icons, the controller 190 may determine that the location of the one icon is a region where the edition target icon is allowed to be located.

If the coordinates of the location of the edition target icon indicate the region where the edition target icon is allowed to be located (S1060-Y), the controller 10 provides haptic feedback (1070). For example, if the coordinates of the location of the edition target icon 1190 are located on the region on which the sixth icon 1160 is located, the controller 190 may provide haptic feedback.

The controller 190 receives a location movement command of the user (S1080). At this time, the location movement command of the user may be input by raising the user's hand from the edition target icon.

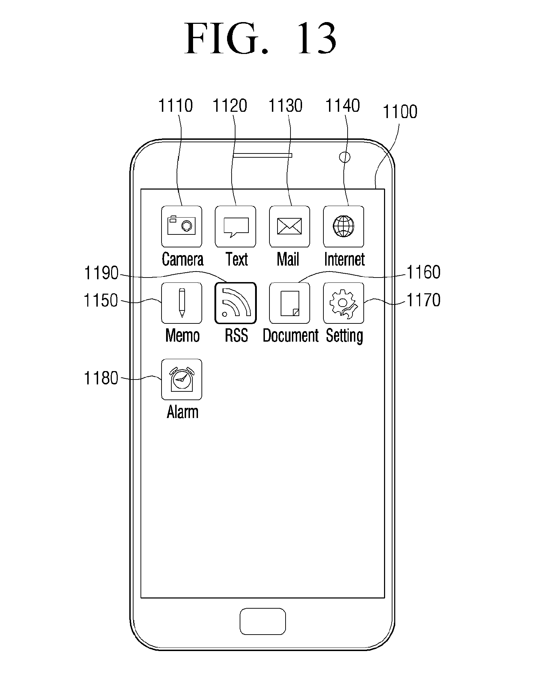

The controller 190 displays the edition target icon on the corresponding location (S1090). That is, the controller 190 may display the edition target icon 1190 on the location of the sixth icon 1160 as shown in FIG. 13. At this time, the sixth icon 1160, the seventh icon 1170, and the eighth icon 1180 are moved to locations of the seventh icon 1170, the eighth icon 1180, and the edition target icon 1190, respectively.

As described above, if the edition target icon is allowed to move to the region where another icon is located, haptic feedback is provided according to whether another icon is located on the coordinates of the location of the edition target icon, so that the user can identify a space where the edition target icon can be located without seeing the display screen.

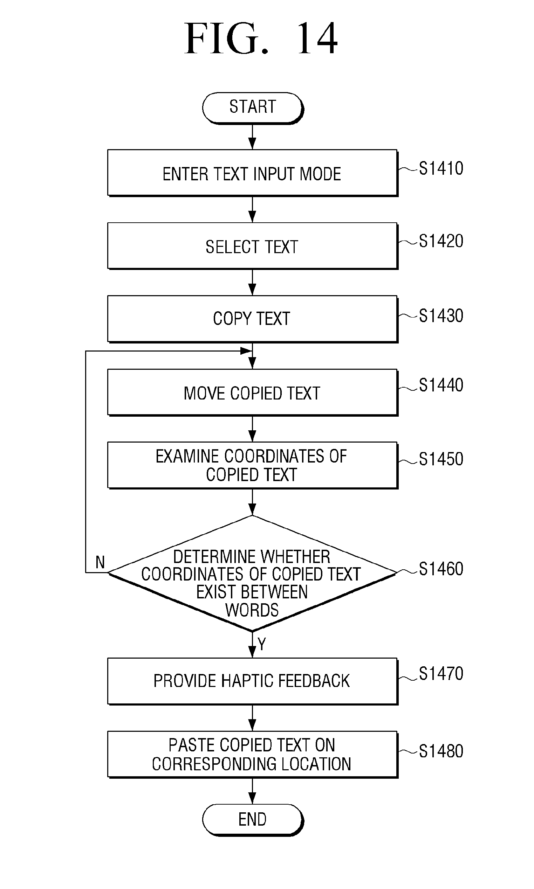

Hereinafter, a method for providing haptic feedback in a text input mode will be explained with reference to FIGS. 14 to 18. FIG. 14 is a flowchart to explain a method for providing haptic feedback in a text input mode according to an exemplary embodiment.

First, the controller 190 enters a text input mode according to a user command (S1410). At this time, the text input mode may be one of a mode in which a text message is written, a mode in which a memo is written, a mode in which a schedule is prepared, and a mode in which a web page is searched.

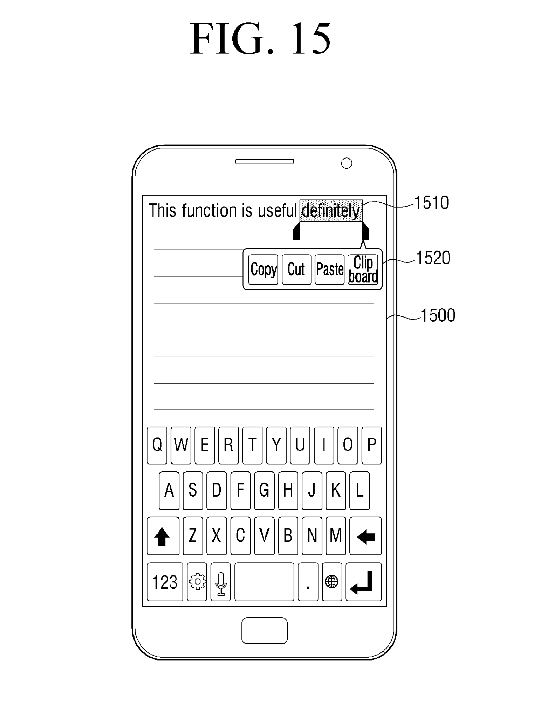

In the text input mode, the controller 190 selects a text according to a user command (S1420). At this time, the user command to select the text may be input by dragging the text that the user wants to select. The text selected by the user may be a word or a sentence. However, this should not be considered as limiting. Also, the text 1510 on screen 1500 selected by the user may be shaded as shown in FIG. 15.

The controller 190 copies the text according to a user command (S1430). The user command to copy the text may be input by selecting a "copy" item on a text edition menu 1520 as shown in FIG. 15.

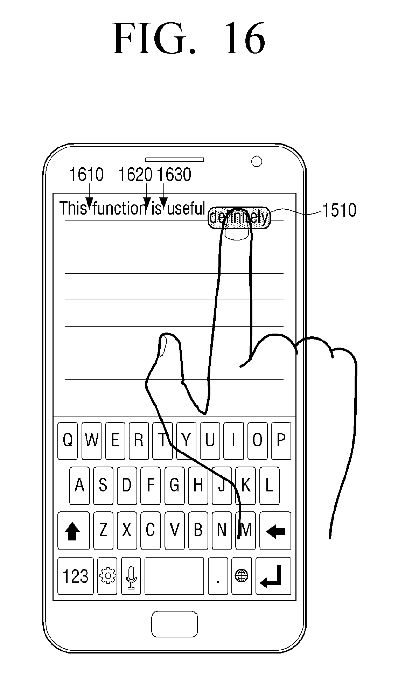

The controller 190 moves the copied text according to a user command (S1440). The user command to move the text may be input by touching the copied text 1510 and dragging it while still touching as shown in FIG. 16.

The controller 190 examines coordinates of the copied text which is being moved (S1450).

The controller 190 determines whether the coordinates of the copied text indicate that the text is located between words (S1460). Specifically, the controller 190 determines whether the copied text is located on one of a first region 1610, a second region 1620, and a third region 1630, which are located between words as shown in FIG. 16.

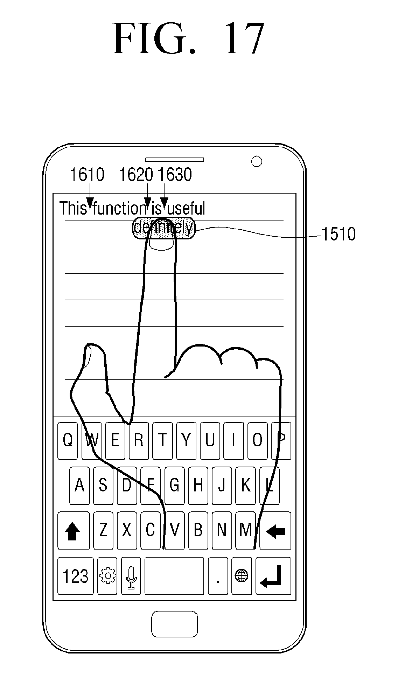

If the coordinates of the copied text indicate that the text is located between words (S1460-Y), the controller 190 provides haptic feedback (S1470). For example, if the copied text is located on the third region 1630 which is located between words as shown in FIG. 17, the controller 190 provides haptic feedback.

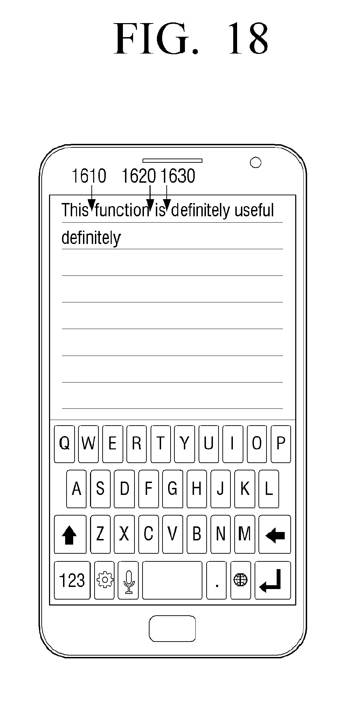

The controller 190 pastes the copied text to the corresponding location and displays it according to a user command (S1480). The user command to paste the copied text to the corresponding location may be input by raising the user's hand from the text. That is, if the user's hand is raised in the state in which the copied text is located on the third region 1630 as shown in FIG. 17, the controller 190 displays the copied text on the third region 1630 as shown in FIG. 18.

Although the text is copied in the above exemplary embodiment, this is merely an example. The technical idea of the present disclosure may be applied to an exemplary embodiment in which the text is cut and moved.

As described above, a space to which the text can be moved is identified in the text input mode based on haptic feedback, so that the user can identify the space where the text can be moved without seeing the display screen.

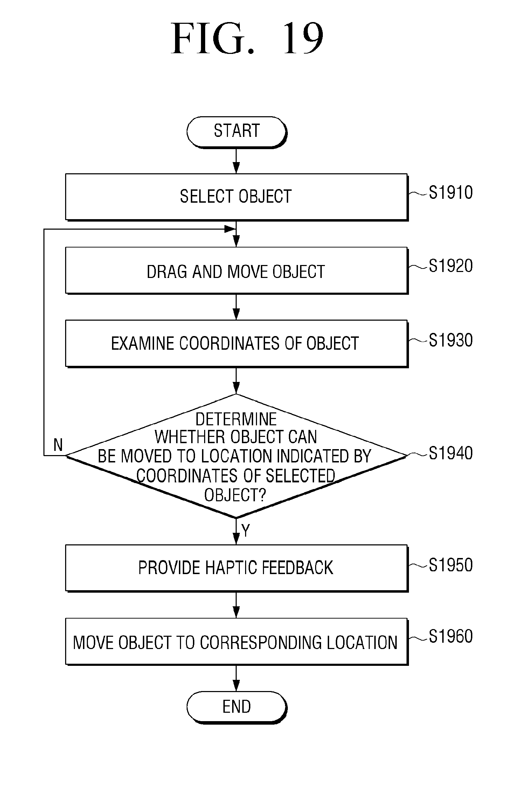

Hereinafter, a method for providing haptic feedback according movement of an object will be explained with reference to FIGS. 19 to 21. FIG. 19 is a flowchart to explain a method for providing haptic feedback according to movement of an object according to an exemplary embodiment.

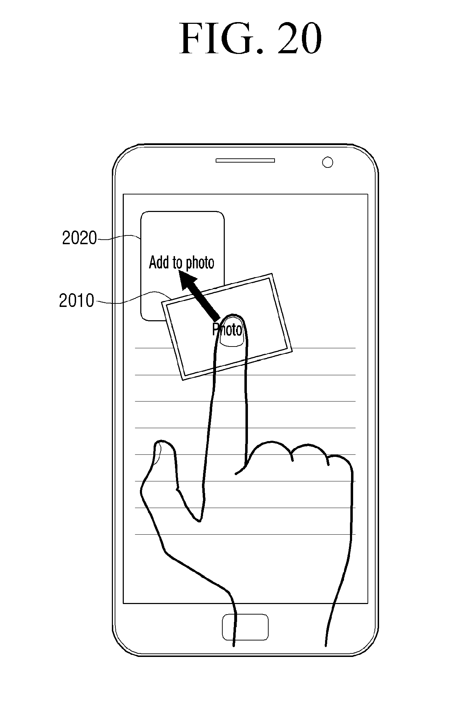

First, the controller 190 selects an object according to a user command (S1910). At this time, the object may be a photo image 2010 as shown in FIG. 20. The user command to select the object may be input by touching the object for a predetermined time (for example, 2 seconds).

The controller 190 moves the object according to a user command (S1920). At this time, the user command to move the object may be input by dragging the selected object as shown in FIG. 20.

The controller 190 examines coordinates of the selected object which is being moved (S1930).

The controller 190 determines whether the coordinates of the selected object indicates a region on which the object is allowed to be located (S1940). Specifically, the controller 190 may determine whether the selected photo image 2010 is located on a photo attachment region 2020 on which the selected photo image 2010 is allowed to be located as shown in FIG. 20.

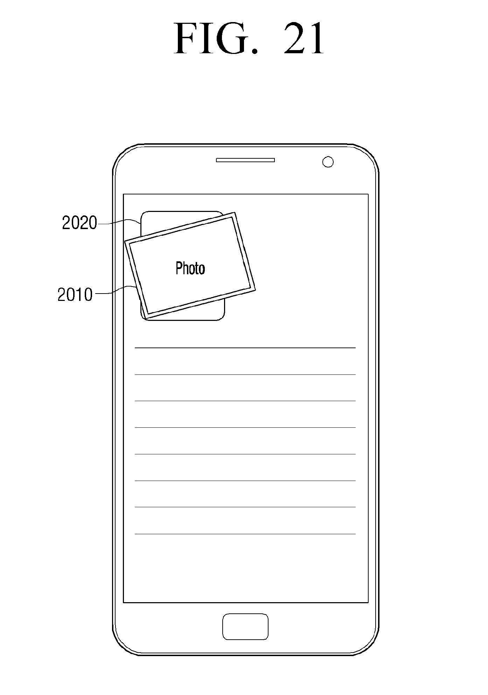

If the coordinates of the selected object indicate a region on which the object is allowed to be located (S1940-Y), the controller 190 provides haptic feedback (1950). Specifically, if the selected photo image 2010 is located on the photo attachment region 2020 as shown in FIG. 21, the controller 190 may provide haptic feedback.

The controller 190 displays the selected object on the corresponding location according to a user command (S1960). At this time, the user command to display the selected object on the corresponding location may be input by raising the user's hand from the object.

As described above, if the selected object is located on the region on which the object is allowed to be located, haptic feedback is provided so that the user can identify whether the selected object is located on the region on which the object is allowed to be located without seeing the display.

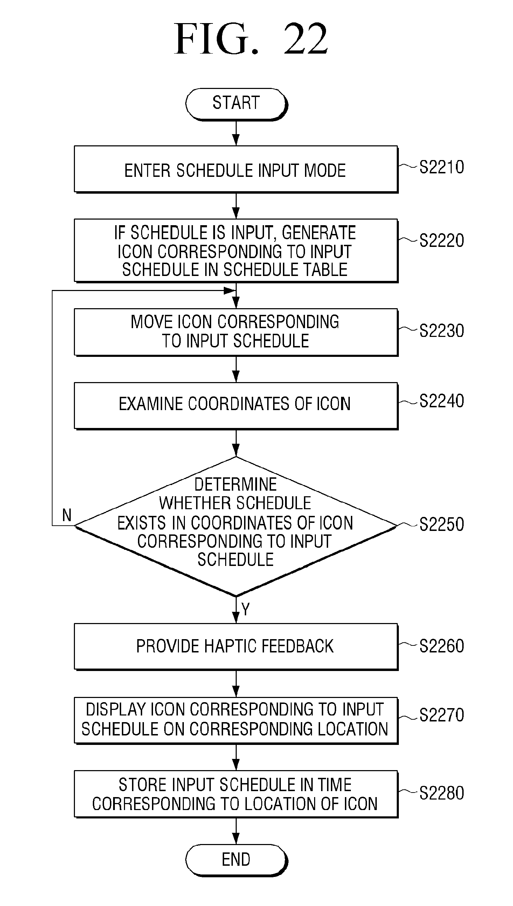

Hereinafter, a method for providing haptic feedback in a schedule input mode will be explained with reference to FIGS. 22 to 25. FIG. 22 is a flowchart to explain a method for providing haptic feedback in a schedule input mode according to an exemplary embodiment.

The controller 190 enters a schedule input mode according to a user command (S2210). At this time, the user command to enter the schedule input mode may be a command to touch an icon corresponding to a schedule management application.

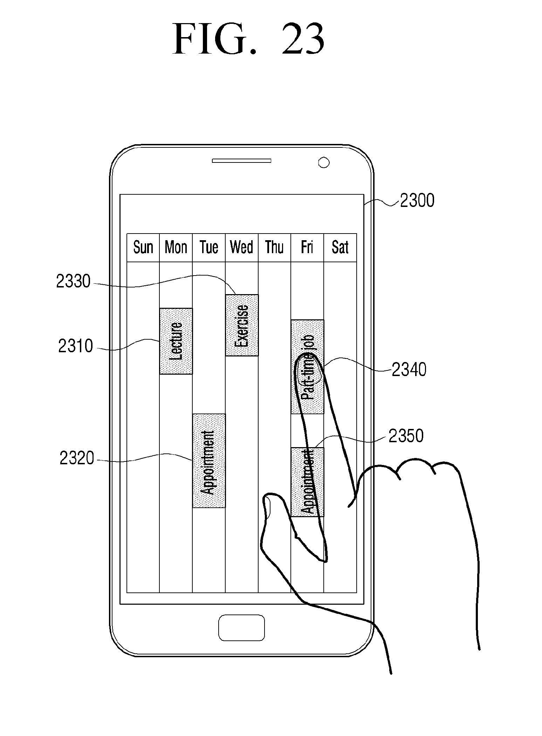

If a user's schedule is input according to user input, the controller 190 generates an icon corresponding to the input schedule on a schedule table (S2220). For example, if a schedule 'part-time job' is input according to user input, the controller 190 generates a part-time job icon 2340 on the schedule table 2300 as shown in FIG. 23. At this time, the icon corresponding to the input schedule may be generated on a certain location of the schedule table 2300 including icons 2310-2350.

The controller 190 moves the icon corresponding to the input schedule according to a user command (S2230). At this time, the user command to move the icon corresponding to the input schedule may be input by dragging the icon 2340 corresponding to the input schedule while still touching.

The controller 190 examines coordinates of the icon (S2240). Specifically, the controller 190 examines coordinates of the icon while the icon corresponding to the input schedule is being moved.

The controller 190 determines whether a schedule exists in the coordinates of the location of the icon corresponding to the input schedule (S2250). Specifically, the controller 190 determines whether an icon corresponding to another schedule exists in the coordinates of the icon corresponding to the input schedule, and determines whether the coordinates indicate a region on which the con corresponding to the input schedule is allowed to be located.

If it is determined that another schedule does not exist in the coordinates of the location of the icon corresponding to the input schedule (S2250-N), the controller 190 provides haptic feedback (S2260).

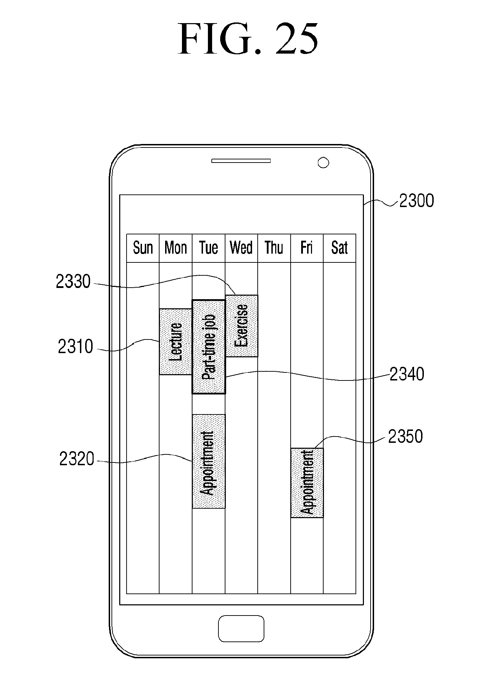

The controller 190 displays the icon corresponding to the input schedule on the corresponding location according to a user command (S2270). Specifically, if a user command to raise user's hand is input when the icon corresponding to the input schedule is placed on the corresponding location, the controller 190 may display the icon 2340 corresponding to the input schedule on a location of Tuesday morning as shown in FIG. 25.

The controller 190 stores the input schedule in the time corresponding to the location of the icon (S2280). Specifically, if the icon 2340 corresponding to the input schedule is located on the Tuesday morning as shown in FIG. 25, the controller 190 may store the input schedule in the Tuesday morning.

As described above, haptic feedback is provided according to movement of the icon corresponding to the input schedule, so that the user can manage schedule information more easily and interestingly.

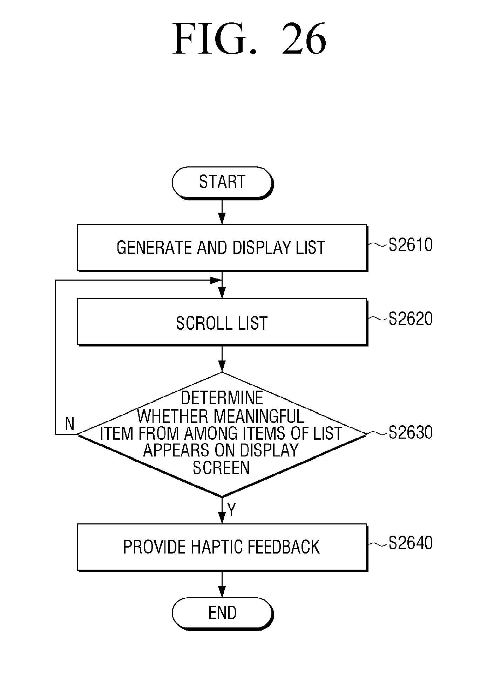

Hereinafter, a method for providing haptic feedback if a meaningful item is displayed on a list will be explained with reference to FIGS. 26 to 28. FIG. 26 is a flowchart to explain a method for providing haptic feedback if a meaningful item is displayed on a list according to an exemplary embodiment.

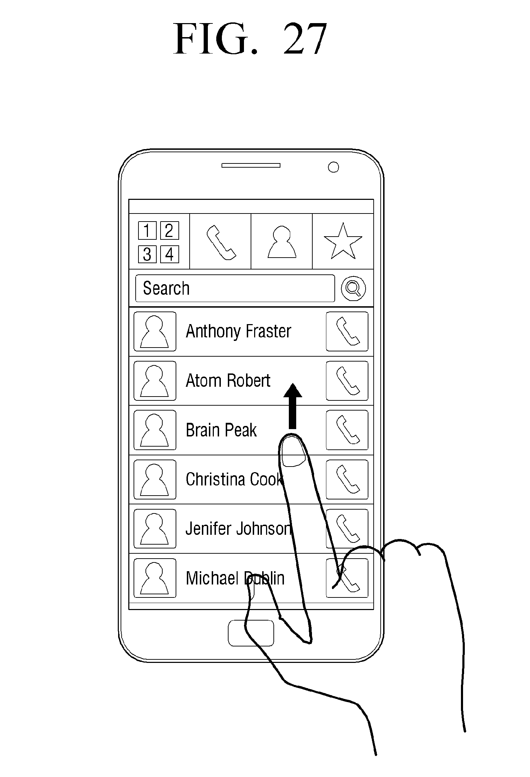

First, the controller 190 generates a list according to a user command and displays the list (S2610). The list may be a list of phone numbers as shown in FIG. 27. However, this is merely an example and the technical ideal of the present disclosure can be applied to various lists such as a list of text messages or a list of memos. The user command to generate the list may be input by touching a phone number search icon displayed on the display 120 to select it.

The controller 190 scrolls the list according to a user command (S2620). At this time, the user command to scroll the list is a command to touch the display 120 with an object (for example, user's hand) and move the object in a predetermined direction while still touching. A scroll speed of the list may vary according to a movement speed of the object.

The controller 190 determines whether a meaningful item appears on the display screen from among the items included in the list (S2630). The meaningful item refers to a special item that is distinguished from general items included in the list. For example, if the list is a list of phone numbers, the meaningful item may be a phone number that is marked as favorites, a frequently used phone number, or a most recently dialed phone number. Also, if the list is a list of text messages, the meaningful item may be a unread text message, a newly received text message, or a text message for which a undelete function is set by the user.

If the meaningful item appears on the display screen from among the items included in the list (S2630-Y), the controller 190 provides haptic feedback (S2640). For example, if the phone number marked as favorites is "Paul Jackson", the controller 190 provides haptic feedback when an item 2810 corresponding to "Paul Jackson" is displayed while the list is being scrolled.

Also, the controller 190 may provide different haptic feedback according to a type or importance of the meaningful item. For example, if a phone number marked as favorites is displayed, the controller 190 may provide first haptic feedback, and, if a frequently used phone number is displayed, the controller 190 may provide second haptic feedback. Also, if a most recently dialed phone number is displayed, the controller 190 may provide third haptic feedback. Also, the controller 190 may differently set an intensity of vibration according to the importance of the meaningful item and may provide haptic feedback.

Also, haptic feedback corresponding to the meaningful item may be set by the user. For example, if the first haptic feedback is set to be provided when a first item is displayed, the controller 190 may provide the first haptic feedback when the first item is displayed.

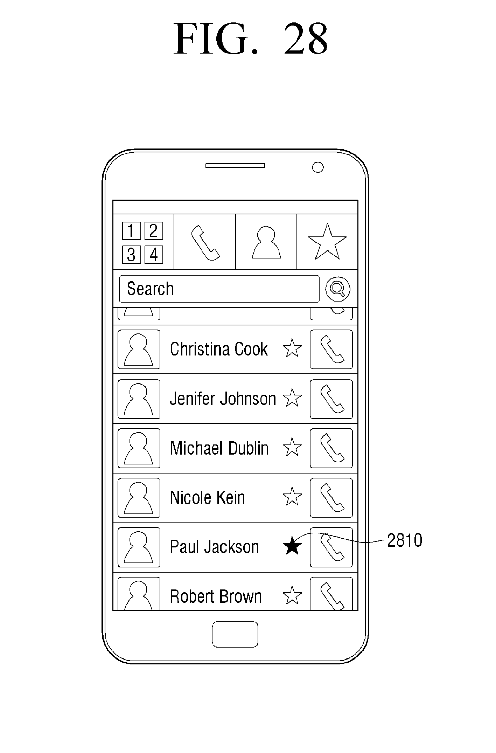

Also, the controller 190 may output a name of the item as a sound while providing the haptic feedback. For example, if the item 2810 corresponding to "Paul Jackson" is displayed as shown in FIG. 28 while the list is being scrolled, the controller 190 may output the name of the corresponding item 2810, "Paul Jackson", as a sound while providing haptic feedback. Accordingly, if the user is blind, the user can identify the meaningful item more easily.

As described above, if the meaningful item is displayed while the list is being scrolled, haptic feedback is provided so that the user can identify the meaningful item of the list without seeing the list.

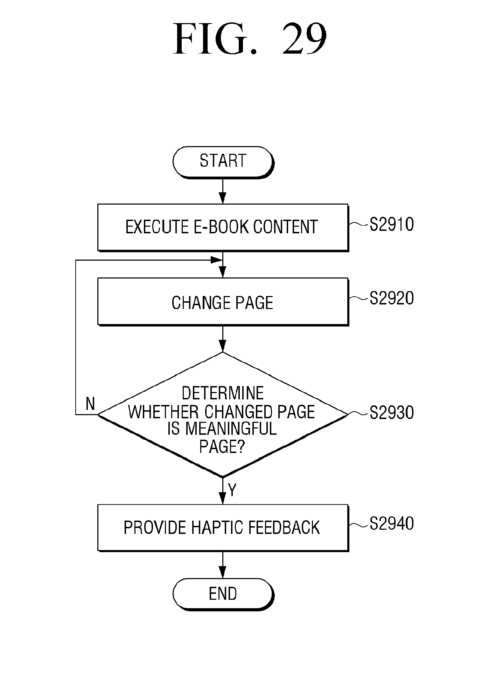

Hereinafter, a method for providing haptic feedback if a meaningful page is displayed when an e-book content is executed will be explained with reference to FIGS. 29 to 32. FIG. 29 is a flowchart to explain a method for providing haptic feedback if a meaningful page is displayed when an e-book content is executed according to an exemplary embodiment.

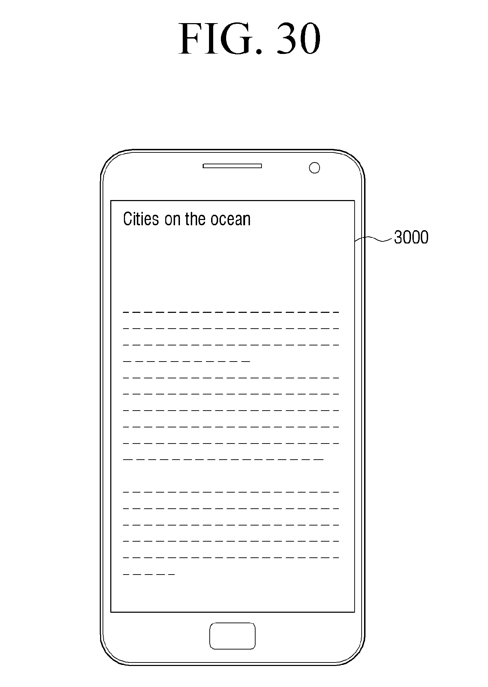

The controller 190 executes an e-book content according to a user command (S2910). Specifically, if an icon corresponding to an e-book content displayed on the display 120 is touched, the controller 190 executes an e-book content 3000 as shown in FIG. 30.

The controller 190 changes a current page to another page according to a user command (S2920). The user command to change the current page to another page may be input by touching on a certain region of the display 120 (for example, a right lower end of the display 120) with an object and dragging the object in a specific direction. However, this is merely an example and a page may be changed according to a different user command.

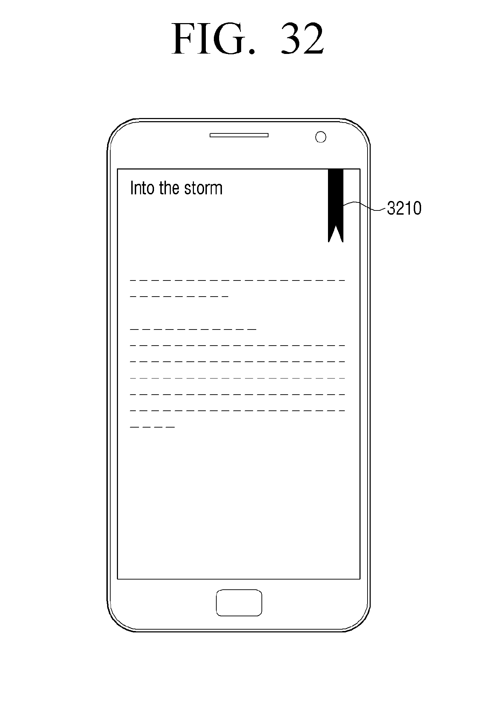

The controller 190 determines whether the changed page is a meaningful page or not (S2930). The meaningful page may be a page that is marked with a bookmark 3210 as shown in FIG. 32. However, this is merely an example and the meaningful page may be a page that includes a specific keyword or picture, a page on which a new chapter starts, or a page that is marked as favorites.

If it is determined that the changed page is a meaningful page (S2930-Y), the controller 190 provides haptic feedback (S2940). The haptic feedback may be set differently according to a type or importance of the meaningful image. For example, if the meaningful page is a page that is marked with a bookmark, the controller 190 may provide first haptic feedback, and, if the meaningful page is a page that includes a specific keyword, the controller 190 may provide second haptic feedback.

In an exemplary embodiment, if the meaningful page is displayed on the e-book content, haptic feedback is provided. However, this is merely an example and the technical ideal of the present disclosure can be applied to any content that consists of a plurality of pages.

As described above, if the meaningful page is displayed, haptic feedback is provided, so that the user can find the meaningful page without seeing the display 120.

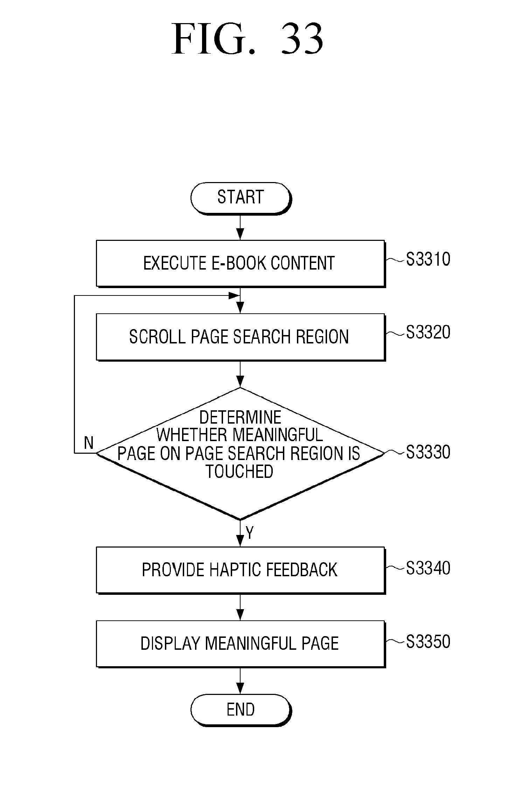

Hereinafter, a method for providing haptic feedback using a page search region when an e-book content is executed will be explained with reference to FIGS. 33 to 35. FIG. 33 is a flowchart to explain a method for providing haptic feedback using a page search region when an e-book content is executed according to an exemplary embodiment.

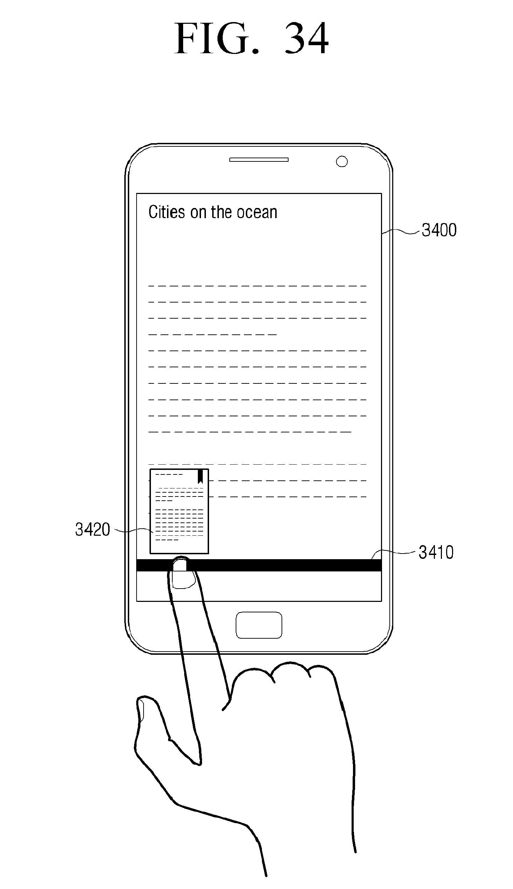

First, the controller 190 executes an e-book content according to a user command (S3310). Specifically, if an icon corresponding to an e-book content displayed on the display 120 is touched, the controller 190 executes an e-book content 3400 as shown in FIG. 34. A this time, the e-book content 3400 includes a page search region to search a page and the page search region includes a page search scroll bar 3410 and a page thumbnail image 3420. The page search scroll bar 3410 is a scroll bar for searching a page of the e-book content 3400 and the page thumbnail image 3420 is a thumbnail image of a page corresponding to a location of an object (for example, user's hand) on the scroll bar.

The page thumbnail image 3420 may be displayed at the same time as the page search scroll bar 3410. However, this is merely an example and the page thumbnail image 3420 may be displayed if the page search scroll bar 3410 is touched.

The controller 190 scrolls the page search region according to a user command (S3320). At this time, the user command to scroll the page search region may be input by touching the page search region with an object and dragging the object in a specific direction while still touching.

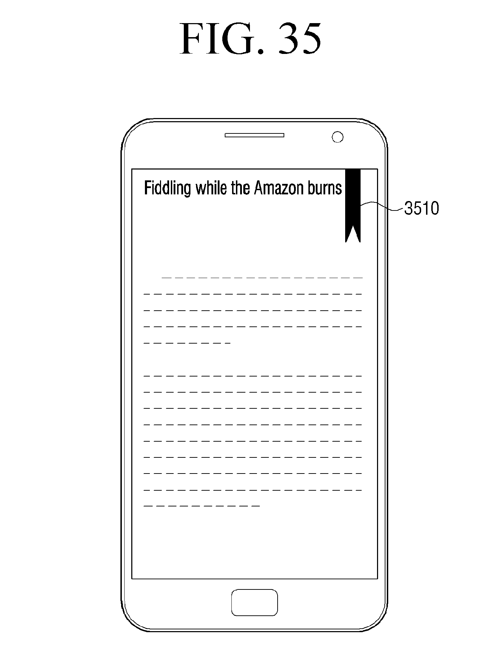

The controller 190 determines whether a meaningful page on the page search region is touched or not (S3330). Specifically, the controller 190 may determine whether the object touches a location corresponding to a meaningful page of the page search scroll bar 3410 or not. The meaningful page may be a page that is marked with a bookmark 3510 as shown in FIG. 35. However, this is merely an example and the meaningful page may be a page that includes a specific keyword or picture, a page on which a new chapter stars, and a page that is marked as favorites.

If the meaningful page on the page search region is touched (S3930-Y), the controller 190 provides haptic feedback (S3340). The haptic feedback may be set differently according to a type and importance of the meaningful page. For example, if the meaningful page is a page that is marked with a bookmark, the controller 190 may provide first haptic feedback, and, if the meaningful page is a page that includes a specific keyword, the controller 190 may provide second haptic feedback.

The controller 190 displays the meaningful page according to a user command (S3350). Specifically, if the page thumbnail image 3420 is continuously touched by the user, the controller 190 may display the meaningful image (marked with the bookmark 3510) as shown in FIG. 35.

In an exemplary embodiment, if the meaningful page is displayed on the e-book content, haptic feedback is provided. However, this is merely an example and the technical idea of the present disclosure can be applied to any content that consists of a plurality of pages.

As described above, if the meaningful page is searched using the page search region, haptic feedback is provided, so that the user can find the meaningful page using the page search region without seeing the display 190.

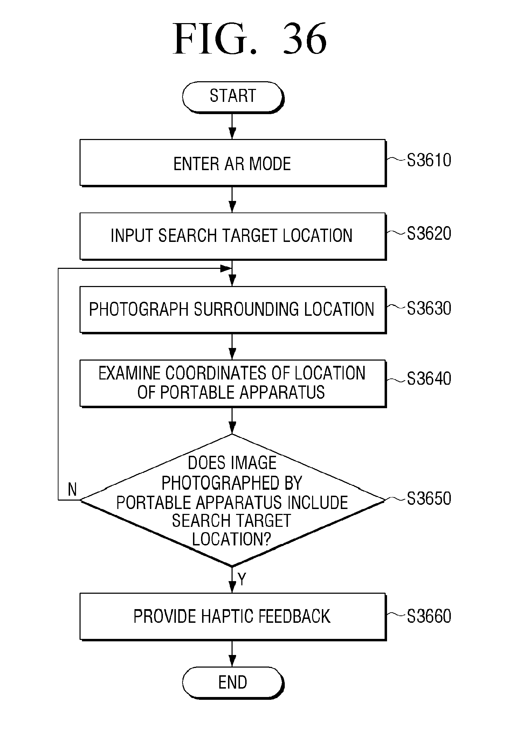

Hereinafter, a method for providing haptic feedback if a search target location is photographed in an augmented reality (AR) mode will be explained with reference to FIGS. 36 to 38. FIG. 36 is a flowchart to explain a method for providing haptic feedback if a search target location is photographed in an AR mode according to an exemplary embodiment.

First, the controller 190 enters the AR mode according to a user command (S3610). The AR mode refers to a mode in which augmented reality is provided by overlapping an image photographed by the photographing unit 140 and data corresponding to the image (for example, a building name or a place name) and displaying the overlapping image.

The controller 190 receives a search target location which is input by the user (S3620). The search target location may be a building name or a place name of a location that the user wants to find. For example, the search target location may be input as "CGV" by the user.

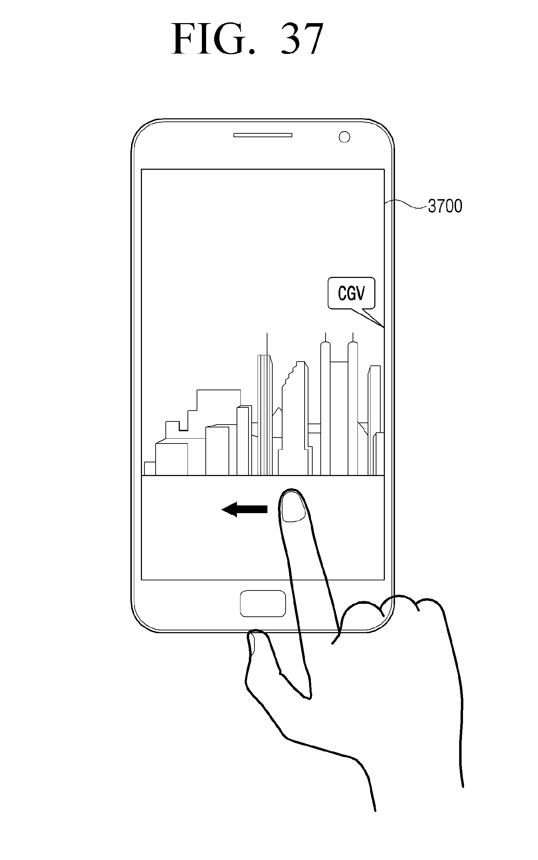

The photographing unit 140 photographs a surrounding location according to a user command (S3630). The controller 190 displays the surrounding image 3700 photographed by the photographing unit 140 on the display 120 as shown in FIG. 37. At this time, the photographing unit 140 may photograph the surrounding location by performing panning while moving.

The controller 190 examines coordinates of a location photographed by the portable apparatus 100 (S3640). At this time, the coordinates of the location photographed by the portable apparatus 100 may be calculated using a global positioning system (GPS) sensor.

The controller 190 determines whether the search target location is included in the image photographed by the portable apparatus 100 (S3650).

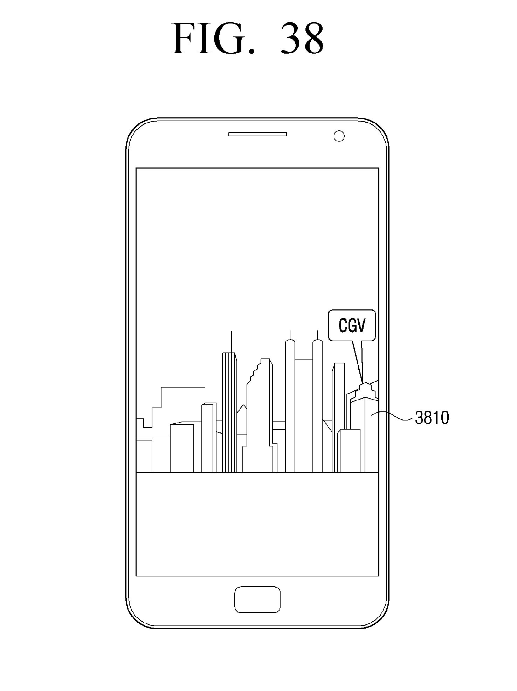

If the search target location is included in the image photographed by the portable apparatus 100, the controller 190 provides haptic feedback (S3660). Specifically, if the search target location is "CGV", and, if "CGV" is included in the image photographed by the portable apparatus 100 as shown in FIG. 38, the controller 190 provides haptic feedback.

The haptic feedback may be set differently according to the search target location. That is, the haptic feedback may be input when the search target location is input.

In an exemplary embodiment, if the search target location is included in the photographed image, haptic feedback is provided. However, this is merely an example. If a point of interest (POI) is included in the photographed image, haptic feedback may be provided. At this time, the POI may be information on main locations such as main facilities, stations, airports, terminals, or hotels.

As described above, if the location that the user wants to search is included in the photographed image in the AR mode, haptic feedback is provided so that the user can find the search target location without seeing the display.

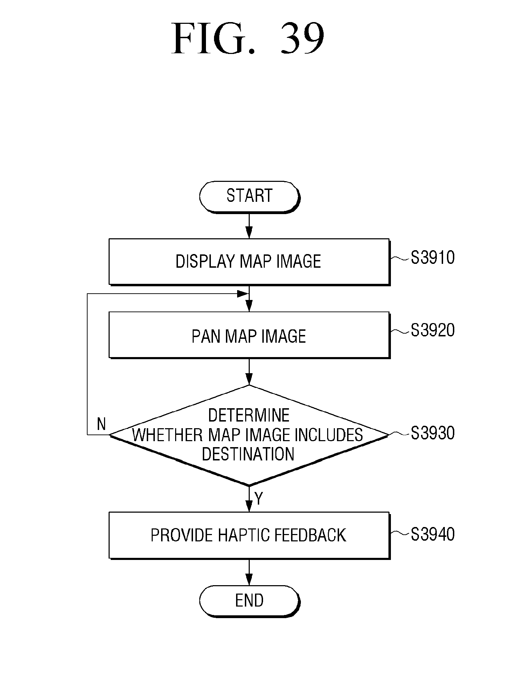

Hereinafter, a method for providing haptic feedback if a destination is searched on a map image will be explained with reference to FIGS. 39 to 41. FIG. 39 is a flowchart to explain a method for providing haptic feedback if a destination is searched on a map image according to an exemplary embodiment.

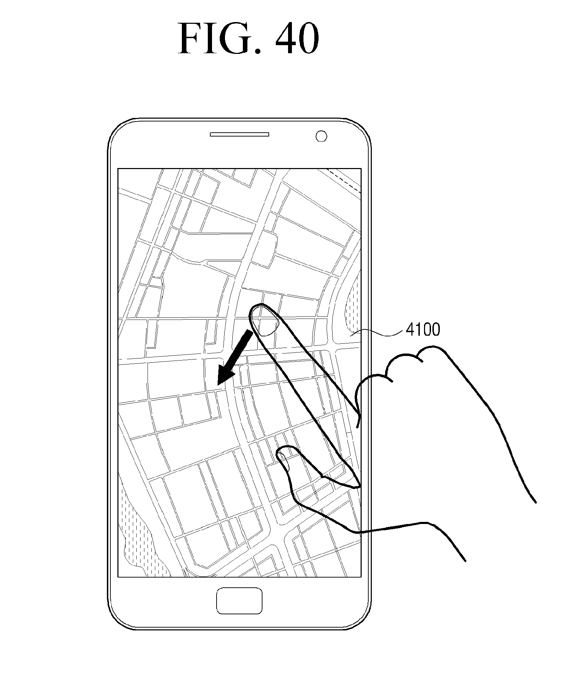

First, the controller 190 displays a map image according to a user command (S3910). The map image may be a general map image 4100 as shown in FIG. 40. However, this is merely an example and the map image may be an image that is photographed from a satellite.

The controller 190 moves the map image according to a user command (S3920). The user command to move the map image may be input by touching the display 120 with an object (for example, user's hand) and dragging the object while still touching.

The controller 190 determines whether a destination is included in the map image or not (S3930). Specifically, the controller determines whether the destination is included in the map image by determining whether coordinates of the destination are included in the map image or not. At this time, the destination may be a location that the user wants to search. However, this is merely an example and the technical idea of the present disclosure may be applied to a POI.

If the destination is included in the map image, the controller 190 provides haptic feedback (S3940). The haptic feedback may be set differently according to the destination. That is, the haptic feedback may be set when the destination is set.

As described above, if the destination is included in the map image as denoted by 4110, haptic feedback is provided so that the user can find the destination on the map image without seeing the display.

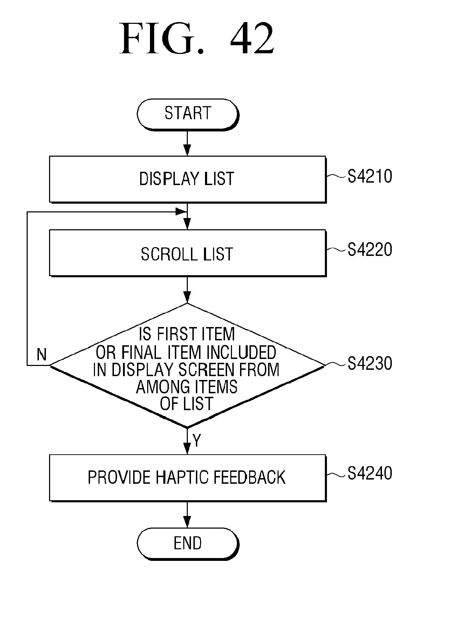

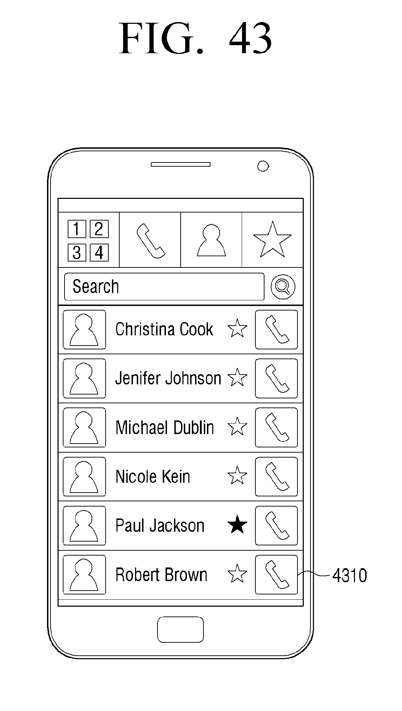

Hereinafter, a method for providing haptic feedback if a first item and a final item of a list are displayed will be explained with reference to FIGS. 42 and 43. FIG. 42 is a flowchart to explain a method for providing haptic feedback if a first item and a final item of a list are displayed according to an exemplary embodiment.

First, the controller 190 displays a list according to a user command (S4210). The list may be a list of phone numbers as shown in FIG. 43. However, this is merely an example and the technical idea of the present disclosure can be applied to various lists such as a list of text messages and a list of memos. The user command to generate the list may be input by touching a phone number search icon displayed on the display 120 to select it.

The controller 190 scrolls the list according to a user command (S4220). At this time, the user command to scroll the list is a command to touch the display 120 with an object (for example, user's hand) and moving the object in a predetermined direction while still touching. A scroll speed of the list may vary according to a movement speed of the object.

The controller 190 determines whether a first item or a final item is included in the display screen from among items included in the list (S4230). The first item is an item that is located on an uppermost end of the list and the final item is an item that is located on a lowermost end of the list.

If the first item or the final item is displayed on the display screen from among the items of the list (S4230-Y), the controller 190 provides haptic feedback (S4240). Specifically, if an item 4310 corresponding to "Robert Brown" is the final item, and, if the item 4310 corresponding to "Robert Brown" is displayed on the display screen, the controller 190 provides haptic feedback.

The controller 190 may provide different haptic feedback according to whether the first item or the final item is displayed. For example, if the first item is displayed, the controller 190 may provide first haptic feedback, and, if the final item is displayed, the controller 190 may provide second haptic feedback.

As described above, if the first item or final item is displayed while the list is being scrolled, haptic feedback is provided, so that the user can identify a start and an end of the list without seeing the display 120.

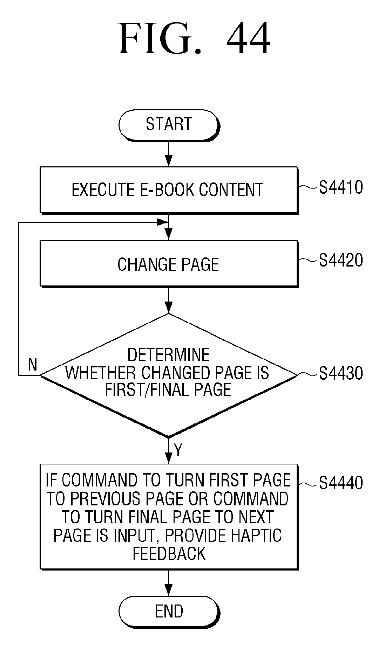

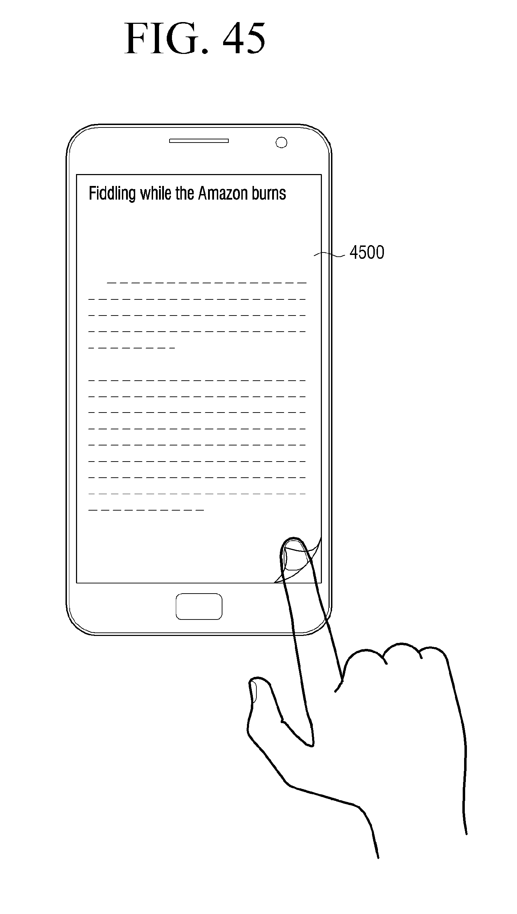

Hereinafter, a method for providing haptic feedback if a first page and a final page of an e-book content is displayed will be explained with reference to FIGS. 44 and 45. FIG. 44 is a flowchart to explain a method for providing haptic feedback if a first page and a final page of an e-book content are displayed according to an exemplary embodiment.

First, the controller 190 executes an e-book content 4500 according to a user command (S4410). Specifically, if an icon corresponding to an e-book content displayed on the display 120 is touched, the controller 190 executes the e-book content 4500 as shown in FIG. 45.

The controller 190 changes a page according to a user command (S4420). At this time, the user command to change the page to another page may be input by touching a certain region (a right lower end of the display 120) of the display 120 with an object and dragging the object in a specific direction while still touching, as shown in FIG. 45. However, this is merely an example and the page may be changed according to a different user command.

The controller 190 determines whether the changed page is a first page or a final page (S4430).

If the changed page is the first page or the final page (S4430-Y), and, if a command to turn the first page to a previous page or a command to change the final page to a next page is input, the controller 190 provides haptic feedback (S4440).

The controller 190 may provide different haptic feedback according to whether the changed page is the first page or the final page. For example, if a command to turn the first page to a previous page is input, the controller 190 may provide first haptic feedback, and, if a command to turn the final page to a next page is input, the controller 190 may provide second haptic feedback.

In the above-exemplary embodiment, haptic feedback is provided in the e-book content. However, this is merely an example and the technical idea of the present disclosure can be applied to any content that consists of a plurality of pages.

As described above, if the command to turn the first page to a previous page or the command to turn the final page to a next page is input, haptic feedback is provided, so that the user can identify the first page or the final page of the e-book more actively.

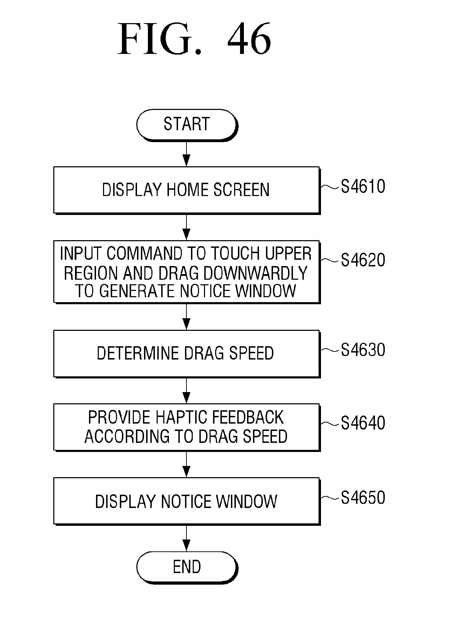

Hereinafter, a method for providing haptic feedback if a notice window is displayed on a home screen will be explained with reference to FIGS. 46 TO 49. FIG. 46 is a flowchart to explain a method for providing haptic feedback if a notice window is displayed on a home screen according to an exemplary embodiment.

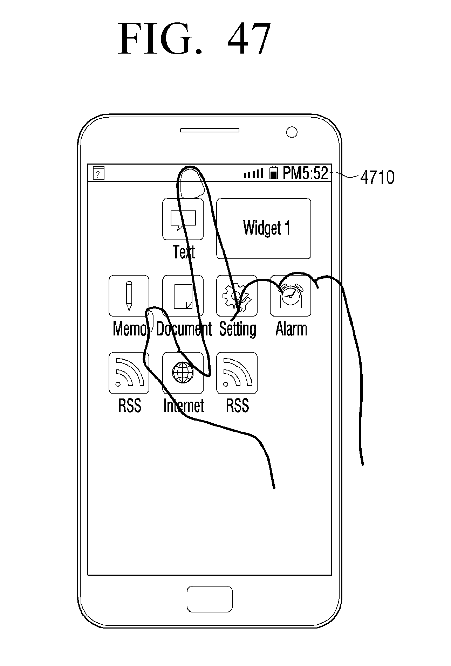

First, the controller 190 displays a home screen according to a user command (S4610). At this time, the home screen may display a plurality of icons selectable by the user and a widget indicating time information as shown in FIG. 47. An upper region 4710 displaying communication state information and time information may be displayed on an upper end of the home screen.

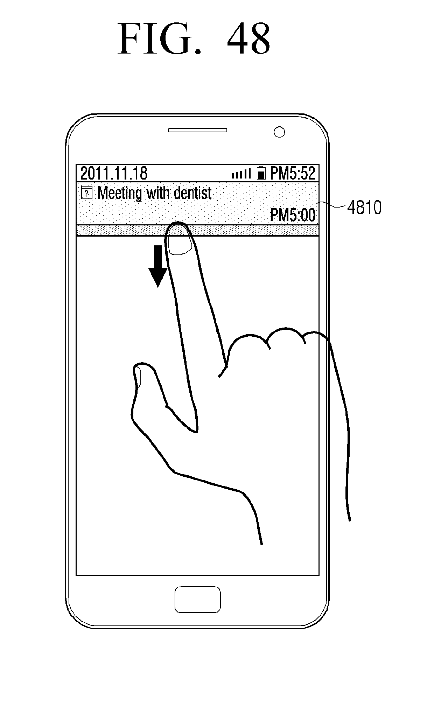

The controller 190 receives a command to touch the upper region 4710 and then drag it downwardly in order to generate a notice window (S4620). Specifically, if a command to touch the upper region 4710 as shown in FIG. 47 and drag it downwardly as shown in FIG. 48 is input, the controller 190 may display a part 4810 of the notice window. At this time, the notice window may provide information such as state information of the portable apparatus 100, schedule information of the user, installation information of an application or program, and update information of an application or program, and at least one of icons on frequently used functions.

The controller 190 determines a drag speed (S4630).

The controller 190 provides haptic feedback on display of the notice window according to the drag speed (S4640). Specifically, if the notice window is drawn to a lowermost end of the screen according to the drag command, the controller 190 may provide haptic feedback by adjusting at least one of an intensity of vibration and a vibrating time according to the drag speed. For example, as the drag speed increases, the controller 190 may provide haptic feedback of a higher intensity of vibration, and, if the drag speed decreases, the controller 190 may provide haptic feedback of a lower intensity of vibration.

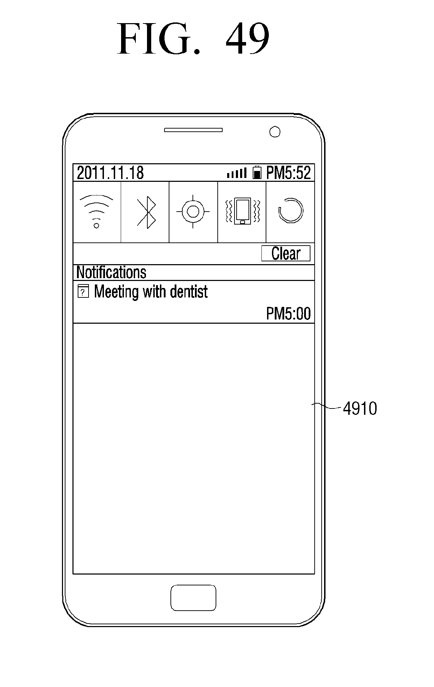

The controller 190 displays the notice window 4910 as shown in FIG. 49 (S4650).

However, if the drag command is not input up to a certain region of the lower end and is stopped prior to reaching the certain region of the lower end, the controller 4910 may not provide haptic feedback and may not display the notice window 4910.

As described above, if the notice window is displayed, haptic feedback is provided, so that the user can identify whether the notice window is displayed or not without seeing the display screen.

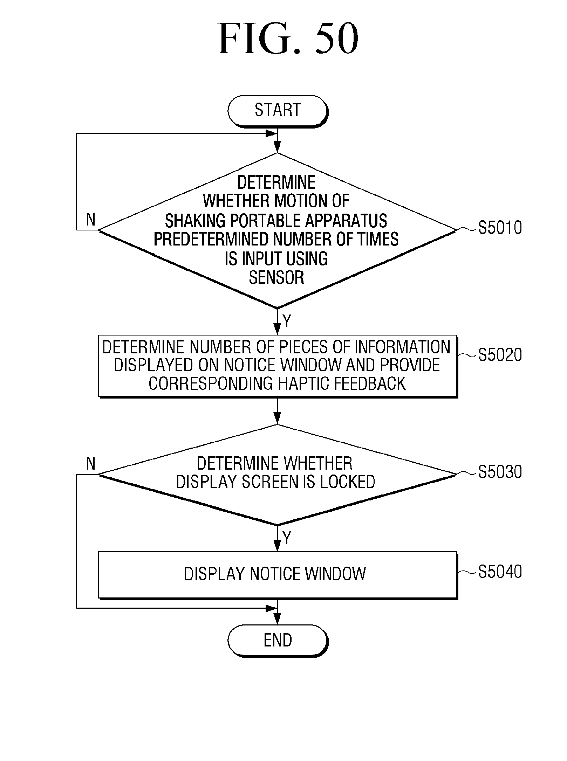

Hereinafter, a method for providing haptic feedback according to information included in a notice window if a predetermined user command is input to the portable apparatus 100 will be explained with reference to FIGS. 50 to 52. FIG. 50 is a flowchart to explain a method for providing haptic feedback according to a number of pieces of information included in a notice window if a predetermined user command is input to the portable apparatus 100 according to an exemplary embodiment.

First, the controller 190 determines whether motion of shaking the portable apparatus 100 a predetermined number of times is input or not using the sensor 110 (S5010). Specifically, the controller 190 senses shaking motion of the portable apparatus 100 using the acceleration sensor 111 or gyro sensor 112 of the sensor 110, and determines whether the portable apparatus 100 is shaken a predetermined number of times (for example, 2 times).

If the motion of shaking the portable apparatus 100 the predetermined number of times is input (S5010-Y), the controller 190 determines a number of pieces of information displayed on the notice window and provides corresponding haptic feedback (S5020). Specifically, if the motion of shaking the portable apparatus 100 the predetermined number of times is input, the controller 190 may provide haptic feedback giving a sense of feeling that a number of marbles corresponding to the number of pieces of information displayed on the notice window are shaken in a box. Also, the controller 190 may provide haptic feedback of at least one of a different intensity of vibration and a different holing time according to the number of pieces of information displayed on the notice window of the portable apparatus 100. For example, if the number of pieces of information displayed on the notice window of the portable apparatus 100 increases, haptic feedback of a high intensity of vibration or a long holing time may be provided, and, if the number of pieces of information displayed on the notice window of the portable apparatus 100 decreases, haptic feedback of a low intensity of vibration or a short holding time may be provided.

If no information is displayed on the notice window of the portable apparatus 100, the controller 190 may not provide haptic feedback.

The controller 190 determines whether the display screen is locked or not (S5030). At this time, if the display screen is a lock screen or if the display screen is turned off, it is determined that the display screen is locked.

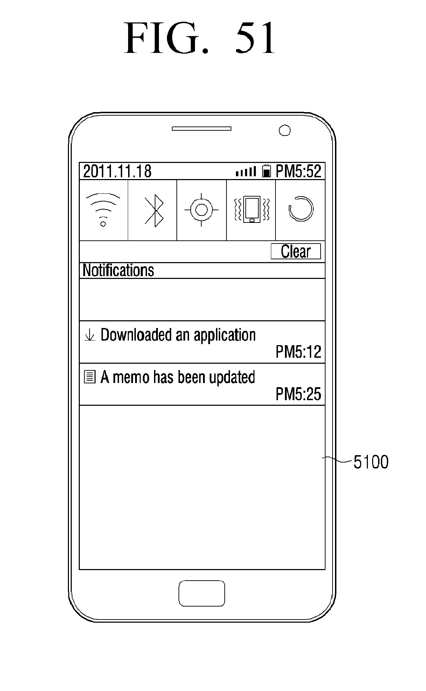

If the display screen is unlocked (S5030-N), the controller 190 may display the notice window 5100 as shown in FIG. 51 (S5040)

If the display screen is locked (S5030-Y), the controller 190 may provide only haptic feedback in the state in which the display screen is turned off.

As described above, if the command to shake the portable apparatus 100 is input, information on the number of pieces of information displayed on the notice window is provided as haptic feedback, so that the user can identify how many pieces of information are displayed on the notice window simply by shaking motion of the portable apparatus 100.

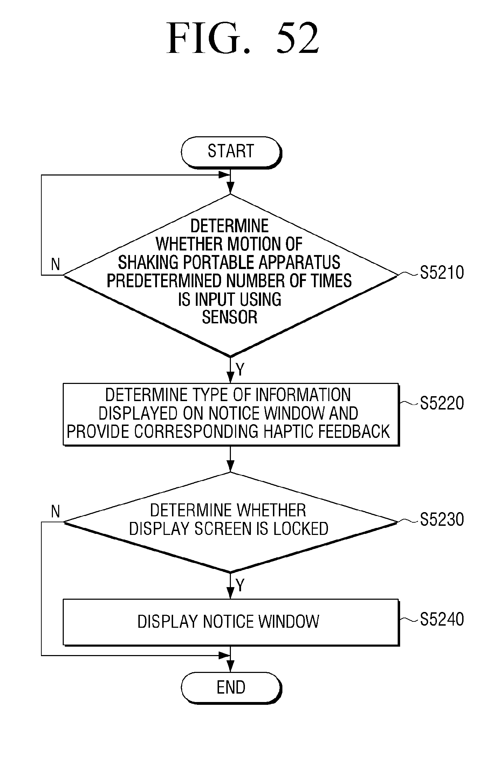

FIG. 52 is a flowchart to explain a method for providing haptic feedback according to a type of information included in a notice window if a predetermined user command is input to the portable apparatus 100 according to an exemplary embodiment.

First, the controller 190 determines whether motion of shaking the portable apparatus 100 a predetermined number of times is input or not using the sensor 110 (S5210). Specifically, the controller 190 senses shaking motion of the portable apparatus 100 using the acceleration sensor 111 or gyro sensor 112 of the sensor 110, and determines whether the portable apparatus 100 is shaken a predetermined number of times (for example, 2 times).

If the motion of shaking the portable apparatus 100 the predetermined number of times is input (S5210-Y), the controller 190 determines a type of information displayed on the notice window and provides corresponding haptic feedback (S5220). Specifically, the controller 190 determines importance of information displayed on the notice window and may provide haptic feedback by adjusting at least one of an intensity of vibration and a holding time according to the importance of the information displayed on the notice window of the portable apparatus 100. For example, as the importance of the information displayed on the notice window of the portable apparatus 100 increases, the controller 190 provides haptic feedback by increasing at least one of the intensity of vibration and the holding time, and, as the importance of the information displayed on the notice window of the portable apparatus 100 decreases, the controller 100 provides haptic feedback by decreasing at least one of the intensity of vibration and the holding time.

The importance of the information displayed on the notice window of the portable apparatus 100 may be determined according to importance information which is input by the user or a frequency of use of information.

Also, the controller 190 may provide different haptic feedback according to a type of the information displayed on the notice window of the portable apparatus 100. For example, if the information displayed on the notice window is schedule information, the controller 190 may provide first haptic feedback, and, if the information displayed on the notice window is application update information, the controller 190 may provide second haptic feedback.

Also, if no information is displayed on the notice window of the portable apparatus 100, the controller 190 may not provide haptic feedback.

The controller 190 determines whether the display screen is locked or not (S5230). At this time, if the display screen is a lock screen or if the display screen is turned off, it is determined that the display screen is locked.

If the display screen is unlocked (S5230-N), the controller 190 displays the notice window 5100 as shown in FIG. 51 (S5240).

However, if the display screen is locked (S5230-Y), the controller 190 may provide only haptic feedback in the state in which the display screen is turned off.

As described above, if the command to shake the portable apparatus 100 is input, information on the type of the information displayed on the notice window is provided as haptic feedback, so that the user can identify the type of the information displayed on the notice window simply by shaking the portable apparatus 100.

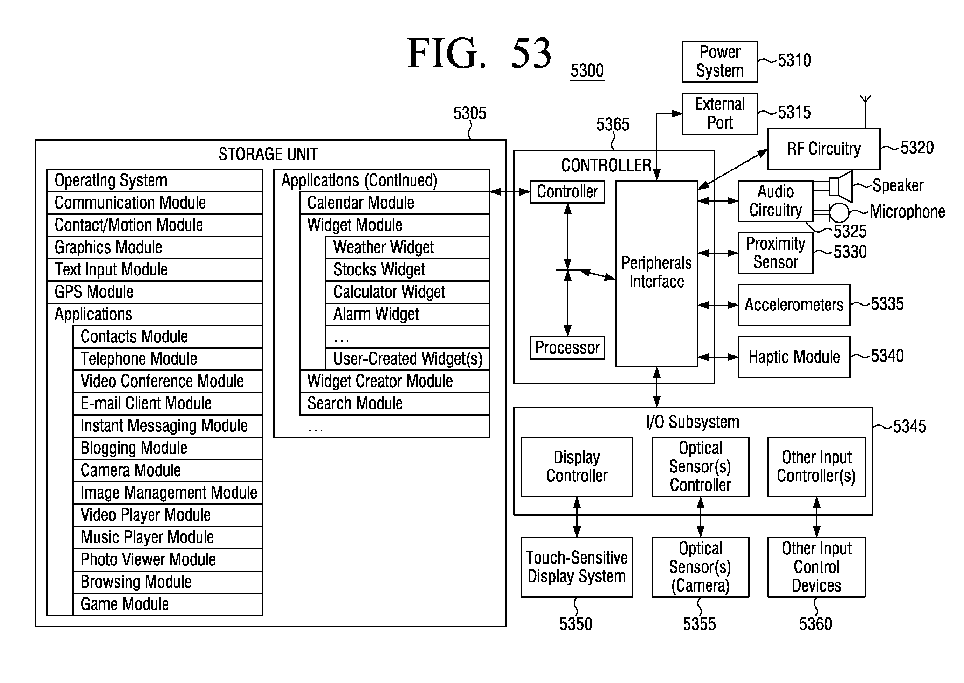

Hereinafter, detailed hardware and software configurations of a portable apparatus 5300 according to another exemplary embodiment will be explained with reference to FIG. 53.
FIG. 53 is a block diagram illustrating a hardware configuration and a software configuration of a portable apparatus according to an exemplary embodiment.

As shown in FIG. 53, the portable apparatus 5300 includes a storage unit 5305, a power system 5310, an external port 5315, a radio frequency (RF) circuitry 5320, an audio circuitry 5325, a proximity sensor 5330, an accelerometer 5335, a haptic module 5340, an input/output subsystem 5345, a touch sensitive display system 5350, an optical sensor 5355 other input control device 5360, and a controller 5365.

The storage unit 5305 stores a variety of modules for controlling the portable apparatus 5300 as shown in FIG. 53. Storage unit 5305 may include one or more storage units. Specifically, the storage unit 5305 stores an operating system, a communication module, a contact/motion module, a graphic module, a text input module, a GPS module, and an application module.

In particular, the application module may include a contact module, a telephone module, a video conference module, an e-mail client module, an instant message module, a blogging module, a camera module, an image management module, a video player module, a music player module, a photo viewer module, a browsing module, a game module, a calendar module, a widget module, a widget creator module, and a search module. The widget module may include a weather widget, a stock widget, a calculator widget, an alarm widget, and a user-created widget.

However, the above-described application module and widget module are merely an example and may further include other application modules and widget modules.

The power system 5310 controls power of the portable apparatus 5300 according to user manipulation. The power system 5310 may control power of all of the elements of the portable apparatus 5300 and may control only some of them.

The external port 5315 connects the portable apparatus 5300 to another external apparatus.

The RF circuitry 5320 communicates with the portable apparatus 5300. The RF circuitry 5320 may communicates not only with another external portable apparatus 5300 but also with an external server or a base station.

The audio circuitry 5325 outputs or receives audio data. The audio circuitry 5325 may be connected to a speaker to output audio signals, or may be connected to a microphone to receive audio signals.

The proximity sensor 5330 receives user's close touch. Specifically, the proximity sensor 5330 may receive user's close touch when an object (for example, user's hand) to input touch is close to the touch display panel (for example, when the object is distanced from the display panel by 1 cm to 2cm).

The accelerometer 5335 senses user's motion on the portable apparatus 5300. Specifically, if the user inputs specific motion (for example, motion of shaking the portable apparatus or motion of tilting the portable apparatus) to the portable apparatus 5300, the accelerometer 5335 senses a movement direction and a speed of the portable apparatus 5300 and senses the user's motion on the portable apparatus.

The haptic module 5430 provides a variety of haptic feedback under the control of the controller 5365. The haptic module 5340 may perform the same function as that of the haptic feedback provider of FIG. 1.

The input/output subsystem 5345 communicates with various input/output apparatuses. The input/output subsystem 5345 may include a display controller, an optical sensor controller, and other input controllers.

The touch sensitive display system 5350 displays an image and also receives user's touch. In particular, the touch sensitive display system 5350 may be controlled by the display controller of the input/output subsystem 5345.

The optical sensor 5355 photographs an image under the control of the optical sensor controller.

The other input control device 5360 receives a user command under the control of the other input controller. The other input control device 5360 may be an input device such as a mouse and a keyboard.

The controller 5365 controls an overall operation of the portable apparatus 5300 according to a user command which is input through various modules and various sensors. In particular, the controller 5365 includes a control unit, a processor, and a peripheral interface. The control unit generates a control signal to control the overall operation of the portable apparatus 5300. The processor performs a variety of calculation to control the portable apparatus 5300. For example, the processor may calculate values which are input to the various sensors in order to grasp a user command which is input to the portable apparatus 5300. The peripheral interface communicates with the external port 5315, the RF circuitry 5320, the audio circuitry 5325, the proximity sensor 5330, the accelerometer 5335, the haptic module 5340, and the input/output subsystem 5345.

In particular, if a predetermined event occurs, the controller 5365 provides haptic feedback corresponding to the predetermined event.

Specifically, if a screen including at least one movable object (icon) is displayed on the touch sensitive display system 5350, and, if the object is moved according to user manipulation to move the object, the controller 5365 determines whether region information on a location to which the object is moved is information on a region on which the object is allowed to be located, and controls the haptic module 5340 to provide haptic feedback according to a result of the determining.

Specifically, if the object is moved, the controller 5365 examines coordinates of the location of the moved object and determines whether coordinates of the location of the moved object are included in coordinates of a region on which the object is allowed to be located. If the coordinates of the location of the moved object are included in the coordinates of the region on which the object is allowed to be located, the controller 5365 may control the haptic module 5340 to provide haptic feedback.

For example, if the object is not allowed to move to a region on which another object is located as shown in FIGS. 5 to 9, and, if the coordinates of the location of the moved object are included in the coordinates of the location of the another object, the controller 5365 does not provide haptic feedback, and, if the coordinates of the location of the moved object are included in coordinates of a region on which the another object is not located, the controller 5365 may control the haptic module 5340 to provide haptic feedback. Also, if the object is allowed to move to a region on which another object is located, and, if the coordinates of the location of other moved object are included in the coordinates of the region on which another object is located, the controller 5365 may control the haptic module 5340 to provide haptic feedback. At this time, the controller 5365 may control the touch sensitive display system 5350 to exchange locations of the object and another object with each other and display the objects.

Also, the controller 5365 may control the touch sensitive display system 5350 to display a list including a plurality of items on the screen and move the plurality of items displayed on the screen according to scroll manipulation on the list. Also, if a predetermined item is displayed on the screen according to an item movement state, the controller 5365 may control the haptic module 5340 to provide haptic feedback.

The predetermined item may be a first item or a final item of the list. Also, if the scroll command is a command to touch the display screen with user's hand and move in a predetermined direction while still touching, and, if the first item or the final item is displayed, the controller 5365 may control the haptic module 5340 to provide different haptic feedback according to a touch movement speed of the user's hand. For example, as the touch movement speed of the user's hand increases, the controller 5365 may control the haptic module 5340 to provide haptic feedback of a high intensity of vibration.

For another example, the controller 5365 may control the telephone module stored in the storage unit 5305 to generate a phone number list. If the phone number list is generated, and, if one of an item corresponding to a phone number which is marked as favorites, an item corresponding to a phone number to which a shortcut button is assigned, and an item corresponding to a most recently dialed phone number is displayed as the predetermined item, the controller 5365 may control the haptic module 5340 to provide haptic feedback.

If a user command to execute an e-book content is input, the controller 5365 controls the touch sensitive display system 5350 to display an e-book content. The controller 5365 determines whether a page displayed on the screen is a predetermined page or not according to a page changing command on the e-book content. If the page displayed on the screen is the predetermined page, the controller 5365 may control the haptic module 5340 to provide haptic feedback.

The predetermined page may be one of a first page and a final page of the e-book content. If the page changing command is a command to touch the display screen with user's hand and move the user's hand in specific direction while still touching, the controller 5365 may control the haptic module 5340 to provide different haptic feedback according to a touch movement speed of the user's hand. For example, as the touch movement speed of the user's hand increases, the controller 5365 may provide haptic feedback of a high intensity of vibration.

For another example, the predetermined page may be a page which is marked with a bookmark. That is, if the page marked with the bookmark is displayed, the controller 5365 may control the haptic module 5340 to provide haptic feedback.

As described above, if the user encounters difficulties in viewing the display screen (for example, when the user is driving), and, if a predetermined event occurs, the user can identify the event by identifying haptic feedback corresponding to the predetermined event.

Also, different haptic feedback is provided according to a type of the predetermined event and user's motion, so that the user can control the portable apparatus 100 actively and interestingly.

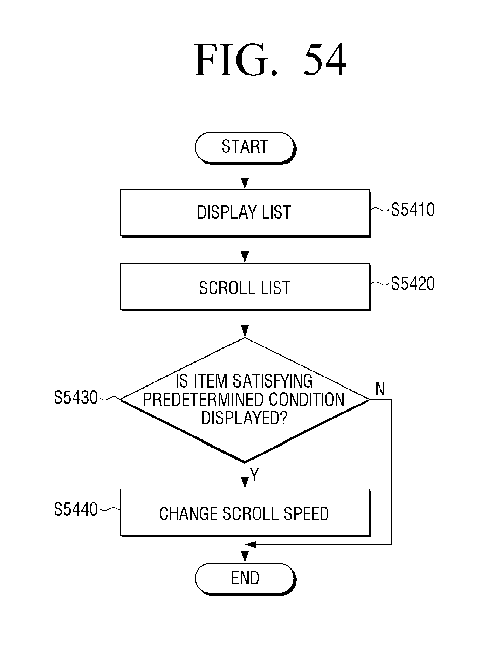

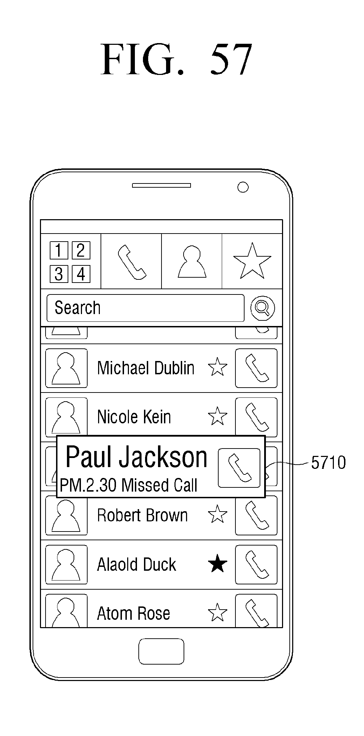

Hereinafter, a method for providing a UI if a meaningful item is displayed when a list is being scrolled will be explained with reference to FIGS. 54 to 58.

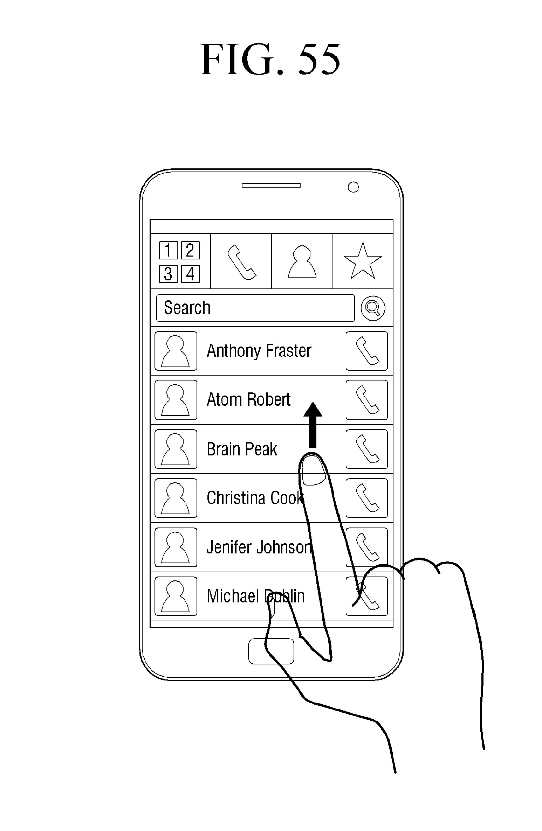

First, the controller 190 generates and displays a list according to a user command (S5410). If the list is a list of phone numbers, the user command to generate the list may be input by touching a phone number search icon displayed on the display 120 to select it. According to an exemplary embodiment, the list may be a list of phone numbers as shown in FIG. 55. However, this is merely an example and the list may be one of a variety of lists such as a list of received messages, a list of contents, and a list of internet shopping products.

The controller 190 scrolls the list according to a user command (S5420). The user command to scroll the list may be input by touching the display 120 with an object (for example, user's hand) and moving the object in a predetermined direction while still touching. The user command to scroll as described above is merely an example. A user motion of shaking the portable apparatus 100 in a predetermined direction may be the user command to scroll.

The controller 190 determines whether an item that satisfies a predetermined condition from among the items of the list is displayed on the display screen or not (S5430). The item that satisfies the predetermined condition is a meaningful item and is a special item that is distinguished from the other items of the list. For example, if the list is a list of phone numbers, the item that satisfies the predetermined condition may be at least one of an item corresponding to a phone number which is marked as favorites, an item corresponding to a phone number to which a shortcut button is assigned, an item corresponding to a most recently dialed phone number, an item corresponding to a phone number of a missed call, and an item corresponding to a phone number of a user that has more than a predetermined number of schedules.

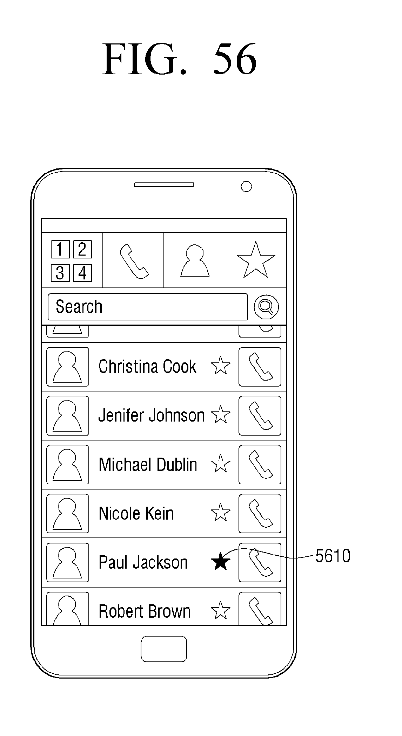

If the item that satisfies the predetermined condition from among the items of the list is displayed on the display screen (S5430-Y), the controller 190 changes a scroll speed of the list (S5440). In particular, if the item that satisfies the predetermined condition is displayed, the controller 190 may control the display 120 to reduce the scroll speed of the list. For example, if a missed call from "Paul Jackson" is recorded, and if the item 5610 corresponding to "Paul Jackson" is displayed while the list is being scrolled as shown in FIG. 56, the controller 190 may reduce the scroll speed of the list.

Also, if the item that satisfies the predetermined condition is displayed, the controller 190 may control the display 120 to display details of the predetermined condition on the display screen. At this time, the controller 190 may display details of the predetermined condition in a pop-up window form.

For example, if a missed call from "Paul Jackson" is recorded, and, if the item 5610 corresponding to "Paul Jackson" is displayed while the list is being scrolled, the controller 190 reduces the scroll speed of the list, and, if the item 5610 corresponding to "Paul Jackson" is displayed on the middle of the list, the controller 190 may control the display 120 to display a pop-up window 5710 including details of the missed call (for example, information on when a call is missed and information on a caller) and an icon for direct call.

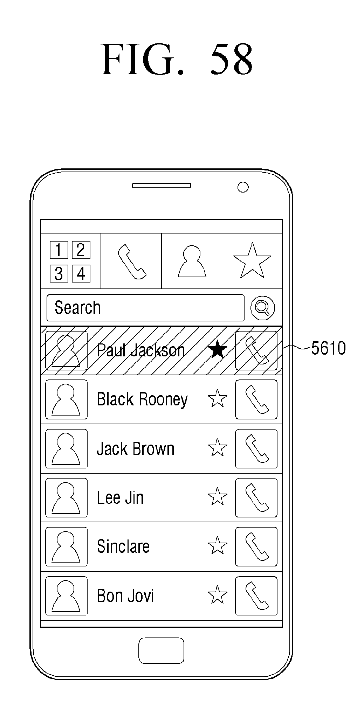

Also, if the item that satisfies the predetermined condition is displayed on the display screen, the controller 190 reduces the scroll speed of the list, and, if the item that satisfies the predetermined condition is continuously displayed, the controller 190 may control the display 120 to move the other items displayed on the screen in a predetermined direction and display them. For example, if a missed call from "Paul Jackson" is recorded, and if the item 5610 corresponding to "Paul Jackson" is displayed while the list is being scrolled up, the controller 190 scrolls the items of the list while reducing the scroll speed of the list. If the item 5610 corresponding to "Paul Jackson" is placed on the upper end, the controller 190 does not remove the item 5610 corresponding to "Paul Jackson" from the list and continues displaying it on the upper end of the list as shown in FIG. 58, and may control the display 210 to scroll only the other items. At this time, the item 5610 that is still being displayed on the list may be displayed differently from the other items. For example, the item 5610 that is still being displayed on the list may be displayed darker than the other items as shown in FIG. 58.

In the above-exemplary embodiment, the item that satisfies the predetermined condition is continuously displayed on the upper end of the list. However, this is merely an example and the item may be continuously displayed on other region (for example, a center region or a lower end of the list). Also, in an exemplary embodiment, one item satisfies the predetermined condition. However, this is merely an example. Even if a plurality of items satisfy the predetermined condition, the plurality of items that satisfy the predetermined condition may be continuously displayed on the list.

Also, the controller 190 may output the name of the corresponding item as a sound, while reducing the scroll speed. For example, if the item 5610 corresponding to "Paul Jackson" is displayed while the list is being scrolled, the controller 190 may output the name of the corresponding item 5610, "Paul Jackson", as a sound, while reducing the scroll speed. Accordingly, if the user is blind, the user can easily identify the meaningful item.

As described above, if the item that satisfies the predetermined condition (for example, a meaningful item) is displayed while the list is being scrolled, the scroll speed is reduced, so that the user can identify the meaningful item from the list more easily and manipulate it.

In the above-described exemplary embodiment, the item that satisfies the predetermined condition if the list is a list of phone numbers has been described. However, this is merely an example and the technical idea of the present disclosure can be applied to other list.

For example, if the list is a list of received messages, the item that satisfies the predetermined condition may be at least one of an item corresponding to a message including photo data, an item corresponding to a message including moving image data, an item corresponding to a message including phone number information, and an item corresponding to a message including address information.

For another example, if the list is a list of contents, the item that satisfies the predetermined condition may be at least one of an item corresponding to a content which has more than a predetermined number of recommendations, an item corresponding to a latest content, an item corresponding to a content of a predetermined genre, and an item corresponding to a content which is paused.

For still another example, if the list is a list of internet shopping products, the item that satisfies the predetermined condition may be at least one of an item corresponding to a product that has more than a predetermined number of recommendations, an item corresponding to a product that is most sold, an item corresponding to a product that has a price of a predetermined range, and an item corresponding to a product which has more than a predetermined number of product reviews.

For still another example, if the list is a list of facebook time lines, the item that satisfies the predetermined condition may be an item corresponding to a message having many "Likes".

According to an exemplary embodiment, the user may set the item that satisfies the predetermined condition. For example, if the list is a list of internet shopping products, the user may set a price of a predetermined range as the predetermined condition.

FIG. 59 is a block diagram provided to explain a configuration of a display apparatus according to an exemplary embodiment.

Referring to FIG. 59, the display apparatus 5900 may include a display 5910,an input 5920, and a controller 5930.

The display 5910 display a variety of screens. To be specific, the display 5910 may display a plurality of contents. The 'content' as used herein may encompass video, images, music, documents, or texts, and the display 5910 may display at least one of titles, file names, and images of the respective contents. That is, the display 5910 may display a plurality of contents in a form of list.

In one example, the display 5910 may also display a scroll bar. The scroll bar may indicate a relative position of the contents currently displayed on a screen, and this is a GUI element to receive a user command to display the other contents that are not currently displayed.

The content may be stored at the display apparatus 5900, or at an external server (not illustrated) such as web server. When the content is stored at the external server (not illustrated), the display 5910 may display a list of a plurality of contents received from the external server (not illustrated). In an exemplary embodiment, the display apparatus 5900 may include a communication module (not illustrated) which can communication with the external server (not illustrated) via a network.

The display 5910 with the functions explained above may be implemented as a liquid crystal display (LCD) panel, or organic light emitting diodes (OLED), but not limited thereto.

Meanwhile, the display 5910 may be implemented in a form of a touch screen which has inter-layer structure with a touchpad. Accordingly, the display 5910 may also be used as an input 520 (to be explained below), as well as an output apparatus. The touch screen may detect a touch input pressure in addition to location and area of the touch, and transmit the same to the controller 5930.

The input 5920 receives a variety of user commands. To be specific, the input 5920 receives a scroll input to search a plurality of contents.

The 'scroll' as used herein refers to a manipulation that moves the currently-displayed screen vertically or horizontally, according to which the currently-displayed screen moves on vertically or horizontally to bring in another screen that has been hidden, when the information for display on a screen is larger than can be displayed at once on the screen.

The input 5920 may be implemented as a remote control device such as a mouse, a touch screen, or a remote controller to input a command.

For example, when the input 5920 is implemented as a mouse, the user may input scroll by manipulating a wheel on a mouse or selecting a scroll bar and moving it with a mouse. The user may manipulate the wheel on the mouse downwardly or upwardly, or select the scroll bar with the mouse and move it left and right or up and down to thus input a scroll.

When the input 5920 is implemented as a touch screen, the user may input a scroll by contacting a screen with a touch means and moving it left and right or up and down.

The controller 5930 may control the overall operation of the display apparatus 5900. That is, the controller 5930 may control the display 5910 to display hidden content in response to an input of a scroll.

The controller 5930 may control so that new content is displayed, by consider the direction and degree of a scroll as inputted.

That is, the controller 5930 may display new content according to a direction of the inputted scroll.

By way of example, when the input 5920 is implemented as a mouse, in response to a user's input of downward (or upward) scroll, the controller 5930 may control so that the currently-displayed content is moved upwardly (or downwardly), the content displayed on the upper portion (or lower portion) of the screen is removed, and new content appears from the lower portion (or upper portion).

Further, when the user inputs a leftward scroll (or rightward scroll), the controller 5930 may control so that the content on the screen is moved to the right (or left) direction, content on the right portion (or left portion) is sequentially removed, and new content appears from the left portion (or the right portion).

In another example, when the input 5920 is implemented as a touch screen, the user may input a downward scroll (or upward scroll), in response to which the controller 5930 may control so that the content on the screen is moved to a lower (or upper) direction, content on the lower portion (or upper portion) is removed sequentially, and new content appears from the upper portion (or lower portion).

Further, when the user inputs a leftward scroll (or rightward scroll), the controller 5930 may control so that the content on the screen is moved to the left (or right) side, content on the left portion (or right portion) of the screen is removed sequentially, and new content appears from the right portion (or left portion).

Further, the controller 5930 may cause new content to be displayed, depending on a degree of inputted scroll. For example, as the degree of scroll increases, the controller 5930 may display the content relatively farther away from the currently-displayed content, or as the degree of scroll decreases, the controller 5930 may display the content relatively closer to the currently-display content.

Further, in searching contents according to a scroll, the controller 5930 may control the speed of moving contents displayed on a screen, based on the speed of the inputted scroll. For example, as the speed of inputted scroll increases, the controller 5930 may control so that the currently-displayed content disappears and new content appears with higher speed. Likewise, the controller 5930 may control so that currently-displayed content disappear and new content appears with decreased speed, as the speed of the inputted scroll is slower.

Accordingly, the controller 5930 may control so that the previously-displayed content is removed and new content appears in accordance with the direction, degree and speed of a scroll. As a result, the user may search the contents using the scroll.

When a scroll is inputted, the controller 5930 may control the display 5910 to distinguish and display at least one content of the plurality of scroll-searched contents that corresponds to the scroll speed, That is, when new contents that have been hidden before appear, the controller 5930 may distinguish at least one content that corresponds to the scroll speed from among the newly-displayed contents and display the same.

The 'at least one content' may be included in a group that corresponds to the scroll speed, among a plurality of groups which are categorized in advance under preset classification criteria.

The above operation will be explained in detail below with reference to FIG. 60.

FIG. 60 is provided to explain content which is displayed according to a scroll speed, according to an embodiment.

To be specific, the controller 5930 may classify a plurality of contents into a plurality of groups under preset classification criteria, and set a range of scroll speeds corresponding to the respective groups.

For example, referring to FIG. 60A, the controller 5930 may divide a plurality of contents under Groups I, II, III according to preset criterion, and may set scroll speed ranges corresponding to the respective groups, such as, above v1 for Group I, between v1 and v3 for Group II and between v1 and v2 for Group III. 'v3' may have a speed value greater than v2, and v2 may have greater speed value than v1. A method for classifying a plurality of contents will be explained in detail below.

In response to a scroll input, the controller 5930 may determine a group that corresponds to the inputted scroll speed and distinguish and display at least one content from the corresponding group, from among the newly-displayed contents.

For example, when a plurality of groups include a first to a third groups, the controller 5930 may display at least one content from the first group when the scroll speed falls within a first speed range, display at least one content from the first and second groups, respectively, when the scroll speed falls within a second speed range, and display at least one content from the first to third groups, respectively, when the scroll speed falls within a third speed range.

Referring to FIG. 60B, when the inputted scroll speed is equal to, or greater than v3, Group I is the one that meets the scroll speed above v3. Accordingly, in response to a scroll input, the controller 5930 may distinguish at least one content of Group I from the other newly-displayed contents, and display the same. When the inputted scroll speed is between v2 and v3, Groups I and II are the ones that meet the scroll speed. Accordingly, in response to a scroll input, the controller 5930 may distinguish at least one content of Groups I and II from among the newly-displayed contents and display the same. Further, when the inputted scroll ranges between v1 and v2, Groups I to III are the ones that meet the v1 ∼ v2 scroll speed. Accordingly, in response to a scroll input, the controller 5930 may distinguish at least one content of Groups I to III from the other newly-displayed contents, and display the same.

Meanwhile, when the inputted scroll speed is less than a preset threshold, the controller 5930 may display newly-displayed contents all in the same manner in response to a scroll input. The 'preset threshold' may be the slowest speed among the scroll speed ranges set for the respective groups.

For example, referring to FIG. 60, when the inputted scroll speed is less than v1, the controller 5930 may display the newly-displayed contents all in the same manner in response to a scroll input.

Meanwhile, the controller 5930 may display at least one content corresponding to a scroll speed, while the scroll input is maintained. That is, the controller 5930 may display at least one content corresponding to the scroll speed, while the displayed contents are moved on the screen in response to a scroll.

Meanwhile, the preset criterion for classifying a plurality of contents to a plurality of groups may be set in various manners. That is, the controller 5930 may apply various classification criteria to divide the plurality of contents into a plurality of groups.

For example, the preset classification criteria may include frequency of playing a plurality of contents, popularity of a plurality of contents, or user preference for a plurality of contents.

To be specific, when the preset classification criterion is applied as a frequency of plying a plurality of contents, the contents of the first to third groups may be so grouped in the order of higher frequency of playing.

That is, the controller 5930 may divide the frequencies of plying contents based on a plurality of levels, and divide the contents corresponding to the respective levels into corresponding groups based on the frequencies of playing the contents. Accordingly, the display apparatus 5900 may store information about the frequencies of playing contents, or receive the same from an external server (not illustrated), so that the controller 5930 may determine the frequency of playing respective contents using the same. Further, the controller 5930 may also determine the frequencies of playing the respective contents, by referring to metadata with respect to the respective contents.

For example, when the content is music, the controller 5930 may divide the music contents into a first group with frequency of playing exceeding 100 times, a second group with frequency of playing between 50 and 100 times, and a third group with frequency of playing between 10 and 50 times. In another example, when the content is video, the controller 5930 may divide the video contents into a first group with frequency of playing exceeding 10 times, a second group with frequency of playing between 5 and 10 times, and a third group with frequency of playing between 1 and 5 times.

For another example, when the content is posting (i.e., text or image) uploaded on a social network server (SNS) or other web servers, the controller 5930 may divide the posting contents into a first group with frequency of hits exceeding 1000 times, a second group with frequency of hits between 500 and 1000 times, and a third group with frequency of hits between 100 and 500 times.

However, the above are given only for purpose of explanation, and the range of frequencies based on a plurality of levels may be varied appropriately.

In yet another example, when the preset classification criterion is the popularity of a plurality of contents, the plurality of contents may be classified into the first to third groups in the order of higher popularity.

That is, the controller 5930 may divide the popularities of the contents based on a plurality of levels, and divide the contents corresponding to the respective levels into corresponding groups based on the popularities. The 'popularity' as used herein may be determined based on rating or recommendations by users with respect to the respective contents.

Accordingly, the display apparatus 5900 may store information about the popularities of contents, or receive the same from an external server (not illustrated), so that the controller 5930 may determine the popularities of the respective contents using the same. Further, the controller 5930 may also determine the popularities of the respective contents, by referring to metadata with respect to the respective contents.

For example, when the content is posting uploaded on a user account at SNS server, the controller 5930 may divide the posting contents into a first group with popularity exceeding 100 times, a second group with popularity exceeding 50 times, and a third group with popularity between 30 and 50 times.

However, the above are given only for purpose of explanation, and the range of popularities based on a plurality of levels may be varied appropriately.

In yet another example, when the preset classification criterion is the user preference to a plurality of contents, the plurality of contents may be classified into the first to third groups in the order of higher user preference.

That is, the controller 5930 may divide the user preferences to the contents based on a plurality of levels, and divide the contents corresponding to the respective levels into corresponding groups based on the user preferences.

Accordingly, the display apparatus 5900 may store information about the user preferences. For example, the display apparatus 5900 may store information about user-preferred music and movie genres according to priorities, and the controller 5930 may divide the plurality of contents into a plurality of groups based on the priorities of the preference information.

For example, it is assumed that the content is movie, and the user has preference in the order of horror, romance and comedy. The controller 5930 in this example may determine the genres of the respective movies using metadata, and divide the contents into a first group (horror), a second group (romance) and a third group (comedy) based on the previously-stored priorities.

An embodiment is explained so that the display apparatus 5900 divides contents into a plurality of groups based on the information about user preferences. However, the inventive concept is not limited to any specific example, and accordingly, the above operation may also be performed at an external server (not illustrated). That is, when the display apparatus 5900 displays contents stored at an external server (not illustrated), the external server (not illustrated) may transmit information about the groups classified based on the preference information to the display apparatus 5900. For example, the external server (not illustrated) may transmit information to the display apparatus 5900, indicating that the first group is horror moves, the second group is romance movies, and the third group is comedy movies. Accordingly, the controller 5930 may divide the horror moves to the first group, romance movies to the second group and comedy movies to the third group, using the information received from the external server (not illustrated).

In another example, the external server (not illustrated) may recommend appropriate contents to the user, using previously-stored information including user's identification, preferences, history of using contents, or current situations (e.g., weather, dates, times, etc.), and transmit information about the recommended contents to the display apparatus 5900 according to the order of priorities. The external server (not illustrated) may be implemented in various types of servers that provide content-recommending services, and may recommend appropriate content to the user using various known recommending algorithms. The controller 5930 may divide a plurality of contents into a plurality of groups based on the received information.

For example, it is assumed that the external server (not illustrated) determines that dance music, ballads, and hip hop music, are recommendable, based on the user preference information. Accordingly, considering the history of user's using contents and time, the external server (not illustrated) may suggest music in the order these are played at current time. For example, when the history of using content indicates that the user plays, at current time, in the order of ballads, hip-hops and dance music, the external server (not illustrated) may transmit information to the display apparatus 5900, indicating that the first group is ballads, the second group is hip-hops, and the third group is dance music. Accordingly, the controller 5930 may divide the ballads into the first group, hip-hops into the second group and dance music into the third group, using the information received from the external server (not illustrated).

Although an embodiment explains that a plurality of contents are divided into first to third groups, this is given only for the purpose of explanation. That is, the controller 5930 may divide a plurality of contents to less than three or more than four groups depending on preset classification criterion, and set scroll speed ranges corresponding to the respective groups.

The controller 5930 may display at least one content corresponding to the scroll speed in various manners.

The above will be explained below with reference to FIGS. 61 to 67.

FIGS. 61 to 67 are views provided to explain a method for displaying contents according to a scroll speed, according to an exemplary embodiment.

To be specific, FIGS. 61 to 67 illustrate an example where an application is executed, on which contents are searchable by dates of playing, so that executed application screen is displayed with the contents arranged thereon in the order of dates of playing.

When application is driven, the controller 5830 may arrange a plurality of contents stored at the display apparatus 5900 in the order of dates of playing, using the previously-stored information, and display the result on the executed application screen.

Further, the controller 5930 may receive the executed application screen, with the contents arranged thereon in the order of dates, from an external server (not illustrated), and display the same on the executed application screen. For example, the external server (not illustrated) may store information about the date of playing contents stored at the external server (not illustrated) via a corresponding application, and arrange the contents played via the corresponding applications in the order of date of playing and provide the same to the display apparatus 5900.

The controller 5930 may divide the contents into a plurality of groups based on frequencies of playing the contents, and display the contents corresponding to the respective groups depending on the speed of the inputted scroll on the executed application screen, in various manners. The information about frequencies of playing contents may be stored in advance at the display apparatus 5900 or received from an external server (not illustrated).

To be specific, when the executed application screen is displayed and a scroll is inputted at a speed less than a preset threshold, the controller 5930 may display the newly-displayed contents all in the same manner in response to a scroll input.

For example, referring to FIG. 61, in a state that the contents played on March 12, 2011 are displayed as thumbnails, it is assumed that the contents played between march 12 and 14, 2011 are displayed in response to a scroll input.

When the inputted scroll speed is less than the preset threshold, the controller 5930 may display the thumbnails 6110 of the contents played on March 12, 2011, the thumbnails 6120 of the contents played on March 13, 2011, and the thumbnails 6130 of the contents played on March 14, 2011, on the front-most part of a screen, in sequential order.

When a scroll is inputted at a speed exceeding a preset threshold, the controller 5930 may distinguish at least one content corresponding to the scroll speed from the newly-displayed contents and display the same, in response to the scroll.

For example, the controller 5930 may overlap at least one contents corresponding to the scroll speed one by one, over a plurality of contents searched in response to the scroll. The controller 5930 may cause at least one content that correspond to the scroll speed to pop up and overlap the contents searched in response to a scroll.

For example, referring to FIGS. 62 to 64, it is assumed that thumbnails of the contents played on March 12, 2011 are displayed, and the contents played between March 12 and 14, 2011 are sequentially displayed in response to a scroll input.

Referring to FIG. 62, when the inputted scroll speed is in the third speed range, the controller 5930 may cause the contents corresponding to the first to third groups to pop up one by one, thus overlapping the other contents. In other words, the controller 5930 may cause the contents 6121, 6122, 6123 of the first to third groups to be sequentially and overlappingly displayed over the other contents 6121 to 6126 played on March 13, 2011, which are searched as the inputted scroll is maintained.

Referring to FIG. 63, when the inputted scroll speed is in the second speed range, the controller 5930 may cause the contents corresponding to the first and second groups to pop up one by one, thus overlapping the other contents. In other words, the controller 5930 may cause the contents 6122, 6123 of the first and second groups to be sequentially and overlappingly displayed over the other contents 6121 to 6126 played on March 13, 2011, which are searched as the inputted scroll is maintained.

Referring to FIG. 64, when the inputted scroll speed is in the first speed range, the controller 5930 may cause the contents corresponding to the first group to pop up one by one, thus overlapping the other contents. In other words, the controller 5930 may cause the content 6123 of the first group to be sequentially and overlappingly displayed over the other contents 6121 to 6126 played on March 13, 2011, which are searched as the inputted scroll is maintained.

An embodiment explains that all the contents that belong to a group corresponding to a scroll speed are sequentially displayed one by one, among the contents searched while the scroll input is maintained. However, this is only for the purpose of explanation. Accordingly, the controller 5930 may control so that only part of the contents belonging to the group corresponding to a scroll speed are displayed sequentially.

For example, referring to FIG. 62, contents 6121, 6122 may be displayed among the contents 6121, 6122, 6123 belonging to the first to third groups, or referring to FIG. 63, only the content 222 may be displayed among the contents 222, 223 belonging to the first and second groups. The number of displayed contents may be set and changed by the user.

In yet another example, the controller 5930 may display at least one content that corresponds to the scroll speed, among a plurality of contents searched in response to the scroll. The controller 5930 may scale the sizes of the respective contents to suit the screen size, before displaying the same.

For example, referring to FIGS. 65 to 67, in a state that thumbnails of the contents played on March 12, 2011 are displayed, it is assumed that the contents played between March 12 and 14, 2011 are displayed sequentially, in response to a scroll input.

Referring to FIG. 65, when the inputted scroll speed is in the third speed range, the controller 5930 may display only the contents belonging to the first to third groups, respectively. That is, with the inputted scroll being maintained, the controller 5930 may display only the contents 6121, 6122, 6123 belonging to the first to third groups, among the contents played on March 13, 2011.

Referring to FIG. 66, when the inputted scroll speed is in the second speed range, the controller 5930 may display only the contents belonging to the first and second groups, respectively. That is, with the inputted scroll being maintained, the controller 5930 may display only the contents 6122, 6123 belonging to the first and second groups, among the contents played on March 13, 2011.

Referring to FIG. 67, when the inputted scroll speed is in the first speed range, the controller 5930 may display only the contents belonging to the first group. That is, with the inputted scroll being maintained, the controller 5930 may display only the content 6123 belonging to the first group, among the contents played on March 13, 2011.

As explained above, the controller 5930 may display at least one content corresponding to the scroll speed in various manners.

FIGS. 68 is a flowchart provided to explain a method for displaying content corresponding to a scroll speed, according to an embodiment.

First, at S6810, the controller 5930 controls the display 5910 to display a plurality of contents. The controller 5930 may display a list of a plurality of contents.

After that, at S6820, the controller 5930 determines whether there is a classification criterion to classify the plurality of contents into a plurality of groups. The classification criterion may include frequency of playing a plurality of contents, popularity of a plurality of contents, or user preference for a plurality of contents.

At S6820-Y, when the result of determination indicates that there is a classification criterion, at S6840, the controller 5930 divides the plurality of contents into a plurality of groups using the classification criterion. For example, an example of having classification criterion may include when information about classification criterion is previously stored at the display apparatus 5900. Accordingly, the controller 5930 may set a corresponding scroll speed range with respect to each group.

At S6820-N, when determining that there is no classification criterion, at S6830, the controller 5930 may acquire a classification criterion. For example, at S6830, the controller 5930 may refer to metadata of the respective contents, or acquire classification criterion from an external server (not illustrated). At S6840, the controller 5930 may divide the plurality of contents into a plurality of groups using the acquired classification criterion.

Although an exemplary embodiment explains that the contents are divided into a plurality of groups before a scroll input, this is only one of various examples. Accordingly, the controller 5930 may divide the contents into a plurality of groups after the scroll is inputted.

At S6850, when a scroll is inputted in a state that a plurality of contents are displayed (S6850-Y), the controller 5930 determines spot contents that corresponds to the scroll speed at S6860. The 'spot contents' as used herein may refer to one or more contents that belong to a group that corresponds to a scroll speed, among the contents newly displayed in response to a scroll input.

The controller 5930 may distinguish the contents searched in response to a scroll from the spot contents and displaying the same at S6870. That is, the controller 5930 may cause the spot contents to sequentially overlap the plurality of contents searched in response to the scroll, or display only the spot contents from among the plurality of contents searched in response to the scroll.

After that, at S6880-Y, when the scroll is ended, the controller 5930 may display the plurality of contents searched in response to the scroll.

FIG. 69 is a flowchart provided to explain a content display method according to an embodiment.

First, at S6910, a plurality of contents are displayed.

At S6920, when a scroll to search a plurality of contents is inputted, at S6930, at least one content that corresponds to the scroll speed is distinguished from the plurality of scroll-searched contents, and displayed. The at least one content that corresponds to the scroll speed may be displayed in a state that the inputted scroll is maintained. That is, the at least one content corresponding to the scroll speed may be displayed, while the contents are displayed and moved on a screen in response to a scroll input.

The 'at least one content' as used herein may be the one that belongs to a group that corresponds to a scroll speed among a plurality of groups classified according to a preset classification criterion.

To be specific, when the plurality of groups, i.e., the first to third groups are included, at least one content that belongs to the first group may be displayed, when the scroll speed is in the first speed range, at least one content that belongs to the first and second groups may be displayed, when the scroll speed is in the second speed range, and at least one content that belongs to the first to third groups may be displayed, when the scroll speed is in the third speed range.

That is, the plurality of contents may be divided into a plurality of groups according to a preset classification criterion, and scroll speed ranges may be set with respect to the respective groups. Then when a scroll is inputted, a group that corresponds to the inputted scroll speed may be determined, and at least one content that belongs to the corresponding group may be distinguished from the newly-displayed contents and displayed.

When the preset classification criterion is frequencies of playing a plurality of contents, the first to third groups may be classified in the order of higher frequencies of playing. Further, when the preset classification criterion is popularities of the plurality of contents, the first to third groups may be classified in the order of higher popularities of the contents. Further, when the preset classification criterion is user preferences to the plurality of contents, the first to third groups may be classified in the order of higher preferences to the contents.

The at least one content that corresponds to the scroll speed may be displayed in various manners.

To be specific, the operation at S6930 may sequentially display at least one content that corresponds to the scroll speed one by one, by overlapping the plurality of contents as searched in response to the scroll. The at least one content that corresponds to the scroll speed may pop up to overlap the plurality of contents searched in response to the scroll.

The operation at S6930 may display at least one content that corresponds to the scroll speed, among the plurality of contents as searched in response to a scroll input.

This has been explained in detail above with reference to FIGS. 61 to 67.

According to an exemplary embodiment, different contents may be searched depending on a scroll speed, when the contents are searched by scrolling.

Processes, functions, methods, and/or software in methods and apparatuses for providing a UI described herein may be recorded, stored, or fixed in one or more non-transitory computer-readable storage media (computer readable recording medium) that includes program instructions (computer readable instructions) such as a computer program to be implemented by a computer to cause one or more processors to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of non-transitory computer-readable storage media include a universal serial bus (USB) memory stick, a memory card, magnetic media, such as hard disks, floppy disks, and magnetic tape; optical media such as CD ROM disks and DVDs (such as digital versatile disk and Blu-ray disk); magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules that are recorded, stored, or fixed in one or more computer-readable storage media, in order to perform the operations and methods described above, or vice versa. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA).

It will be appreciated that embodiments of the present invention can be realized in the form of hardware, software or a combination of hardware and software. Any such software may be stored in the form of volatile or non-volatile storage, for example, a storage device (e.g. a ROM), whether erasable or rewritable or not, or in the form of memory, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

The foregoing exemplary embodiments and advantages are merely exemplary and are not to be construed as limiting the scope of the invention, as defined by the claims. Exemplary embodiments can be readily applied to other types of apparatuses. Also, the detailed description of is intended to be illustrative, and not to limit the scope of the claims, and many alternatives, modifications, and variations will be apparent to those skilled in the art.

Although a few exemplary embodiments have been shown and described, it would be appreciated by those skilled in the art that various changes may be made in these exemplary embodiments without departing from the scope of the present invention, as defined by the claims.

## Claims

1. A method for providing a user interface (UI), the method comprising:
displaying a list comprising a plurality of items on a screen;
moving the plurality of items displayed on the screen in a predetermined direction according to a scroll command on the list, and displaying the plurality of items; and
if a predetermined item is displayed on the screen, providing haptic feedback.

2. The method as claimed in claim 1, wherein the predetermined item is a first item or a final item from among the items included in the list.

3. The method as claimed in claim 2, wherein, if the scroll command is a command to touch the display screen with user's hand and move the user's hand in a predetermined direction while still touching, the providing the haptic feedback comprises, if the first item or the final item is displayed, providing different haptic feedback according to a touch movement speed of the user's hand.

4. The method as claimed in claim 1, 2 or 3, wherein, if the list is a phone number list, the predetermined item is at least one of an item corresponding to a phone number which is marked as favorites, an item corresponding to a phone number to which a shortcut button is assigned, an item corresponding to a most recently dialed phone number, an item corresponding to a phone number of a missed call, and an item corresponding to a phone number of a user who has more than a predetermined number of schedules.

5. The method as claimed in any preceding claim, wherein, if the list is a list of received messages, the predetermined item is at least one of an item corresponding to a message including photo data, an item corresponding to a message including moving image data, an item corresponding to a message including phone number information, and an item corresponding to a message including address information.

6. The method as claimed in any preceding claim, wherein, if the list is a list of contents, the predetermined content is at least one of an item corresponding to a content that has more than a predetermined number of recommendations, an item corresponding to a latest content, an item corresponding to a content of a predetermined genre, and an item corresponding to a content that is paused.

7. The method as claimed in any preceding claim, wherein, if the list is a list of products of internet shopping, the predetermined item is at least one of an item corresponding to a product that has more than a predetermined number of recommendations, an item corresponding to a product that is most sold, an item corresponding to a product that has a price of a predetermined range, and an item corresponding to a product that has more than a predetermined number of product reviews.

8. A portable apparatus comprising:
a display which displays a list comprising a plurality of items;
a haptic feedback provider which provides haptic feedback; and
a controller which controls the display to move the plurality of items in a predetermined direction according to a scroll command on the list and display the plurality of items, and, if a predetermined item is displayed on the display, controls the haptic feedback provider to provide haptic feedback.

9. The portable apparatus as claimed in claim 8, wherein the predetermined item is a first item or a final item from among the items included in the list.

10. The portable apparatus as claimed in claim 9, wherein, if the scroll command is a command to touch the display screen with user's hand and move the user's hand in a predetermined direction while still touching, and, if the first item or the final item is displayed, the controller controls the haptic feedback provider to provide different haptic feedback according to a touch movement speed of the user's hand.

11. The portable apparatus as claimed in claim 8, 9 or 10, wherein, if the list is a phone number list, the predetermined item is at least one of an item corresponding to a phone number which is marked as favorites, an item corresponding to a phone number to which a shortcut button is assigned, an item corresponding to a most recently dialed phone number, an item corresponding to a phone number of a missed call, and an item corresponding to a phone number of a user who has more than a predetermined number of schedules.

12. The portable apparatus as claimed in any of claims 8 to 11, wherein, if the list is a list of received messages, the predetermined item is at least one of an item corresponding to a message including photo data, an item corresponding to a message including moving image data, an item corresponding to a message including phone number information, and an item corresponding to a message including address information.

13. The portable apparatus as claimed in any of claims 8 to 12, wherein, if the list is a list of contents, the predetermined content is at least one of an item corresponding to a content that has more than a predetermined number of recommendations, an item corresponding to a latest content, an item corresponding to a content of a predetermined genre, and an item corresponding to a content that is paused.

14. The portable apparatus as claimed in any of claims 8 to 13, wherein, if the list is a list of products of internet shopping, the predetermined item is at least one of an item corresponding to a product that has more than a predetermined number of recommendations, an item corresponding to a product that is most sold, an item corresponding to a product that has a price of a predetermined range, and an item corresponding to a product that has more than a predetermined number of product reviews.
